(19) Europäisches Patentamt
European Patent Office
Office européen des brevets

(11) Numéro de publication: **0 168 317**
**B1**

# (12) FASCICULE DE BREVET EUROPÉEN

(45) Date de publication du fascicule du brevet: **19.04.89**

(51) Int. Cl.⁴: **C 08 F 10/00**, C 08 F 4/02

(21) Numéro de dépôt: **85401349.7**

(22) Date de dépôt: **03.07.85**

## (54) Procédé de préparation d'une nouvelle composante de métal de transition sur support polymère pour un système catalytique de polymérisation d'oléfines.

(30) Priorité: **13.07.84 FR 8411175**

(43) Date de publication de la demande: **15.01.86 Bulletin 86/3**

(45) Mention de la délivrance du brevet: **19.04.89 Bulletin 89/16**

(84) Etats contractants désignés: **AT BE DE FR GB IT NL SE**

(56) Documents cité: **US-A-4 407 727**

(73) Titulaire: **ATOCHEM, 4 & 8, Cours Michelet La Défense 10, F-92800 Puteaux (FR)**

(72) Inventeur: **Brun, Claude, Clos Saint Pierre Idron, F-64320 Bizanos (FR)**
Inventeur: **Lacombe, Jean- Loup, 24, Avenue Montilleul Résidence Estibert, F-64000 Pau (FR)**

(74) Mandataire: **Foiret, Claude, ATOCHEM Département Propriété Industrielle, F-92091 Paris la Défense 10 Cédex 42 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 168 317 B1

LIBER, STOCKHOLM 1989

**Description**

L'invention a pour objet un procédé de préparation d'une nouvelle composante de métal de transition sur support polymère pour un système catalytique de polymérisation d'oléfines. Elle se rapporte encore au système catalytique renfermant ladite composante et concerne également un procédé de synthèse d'un polymère ou copolymère oléfinique faisant appel audit système catalytique.

On sait que l'on peut produire des polymères ou copolymères oléfiniques de hautes masses moléculaires et à faible taux de cendres en polymérisant ou copolymérisant des oléfines telles que l'éthylène et ses homologues supérieurs, notamment propène, butène-1, pentène-1, méthyl-4 pentène-1, hexène-1, octène-1, au moyen de systèmes catalytiques de type Ziegler-Natta résultant de l'association d'une composante de métal de transition avec un cocatalyseur consistant le plus souvent en un composé hydrocarbylaluminium ou hydrocarbylmagnésium. La composante de métal de transition est généralement obtenue en associant un composé de métal de transition, notamment un composé de titane tel que $TiCl_4$, $TiCl_3$ ou un titanate d'alcoyle, avec un composé de magnésium, en particulier un composé renfermant $MgCl_2$, et éventuellement un composé organique donneur d'électrons et le cas échéant un support poreux organique ou inorganique.

On connait divers procédés permettant de préparer une composante de métal de transition déposée sur un support polymère et renfermant un métal de transition déposée sur un support polymère et renfermant un métal de transition, notamment titane, et du magnésium sous la forme de chlorure.

Par exemple dans la demande de brevet japonais publiée le 31 mai 1972 sous le N° 7 218 846 on décrit un procédé dans lequel une poudre de polyéthylène est traitée à l'aide d'une solution de $MgCl_2$ dans l'éthanol et de $TiCl_4$, puis le produit résultant de ce traitement est séché à une température d'environ 85° C.

Dans le brevet américain N° 4 021 599 on propose un procédé dans lequel on forme une suspension d'une poudre d'un polymère tel que polyéthylène ou polypropylène dans une solution alcanolique d'un sel de magnésium, notamment $MgCl_2$, nitrate de magnésium ou acétate de magnésium, puis on élimine l'alcanol par évaporation pour déposer le composé de magnésium sur le support polymère, et enfin on traite le support chargé du composé de magnésium au moyen d'un halogénure de métal de transition liquide ou en solution dans un hydrocarbure, l'halogénure étant en particulier $TiCl_4$. Le brevet belge N° 855 241 décrit une variante de ce procédé, dans laquelle le support polymère chargé du composé de magnésium est traité par un composé aluminium alcoyle avant d'être soumis à l'action de l'halogénure de métal de transition.

Les procédés précités, utilisant une solution d'un sel de magnésium dans un alcanol pour réaliser le dépôt du composé de magnésium sur le support, présentent certains inconvénients parmi lesquels figure en premier lieu la difficulté d'éliminer à peu près complètement l'alcanol du produit résultant de l'imprégnation du support polymère par la solution alcanolique du sel de magnésium et la présence d'alcanol résiduel dans la composante de métal de transition peut se révéler néfaste pour certaines utilisations des systèmes catalytiques incluant ladite composante de métal de transition.

Un autre procédé objet du brevet belge N° 876 583 consiste à réaliser, en opérant dans un milieu liquide inerte du type hydrocarbure, un mélange d'un support polymère sous la forme de particules ayant un diamètre moyen allant de 20 microns à 5 mm avec, dans un ordre quelconque, un halogénure d'aluminium alcoyle, un composé de magnésium dialcoyle et un alcoolate de titane éventuellement halogéné, puis à évaporer le solvant et à sécher le produit solide résultant par chauffage sous atmosphère inerte à une température inférieure au point de ramollissement du polymère.

Dans un tel procédé une certaine quantité du composé magnésium dialcoyle est transformée en dérivé chloré de magnésium. Toutefois la nature et la quantité du dérivé chloré de magnésium formé ainsi que la répartition de ce dérivé au sein du support sont fortement tributaires de l'ordre dans lequel les précurseurs dudit dérivé chloré de magnésium sont mis en contact, ce qui peut avoir une influence défavorable sur l'activité des systèmes catalytiques utilisant la composante de métal de transition formée par ledit procédé.

L'invention propose un procédé de préparation d'une nouvelle composante de métal de transition sur support polymère ayant une activité élevée en s'affranchissant des inconvénients des procédés décrits plus haut. En particulier le procédé suivant l'invention permet de mieux contrôler la formation des espèces chlorées à base de magnésium, qui sont indispensables pour l'obtention d'une composante de métal de transition, notamment composante de titane, renfermant $MgCl_2$, qui soit hautement active.

Le procédé suivant l'invention pour la préparation d'une nouvelle composante de métal de transition sur support polymère, utilisable comme élément constitutif d'un système catalytique de polymérisation d'oléfines, est du type dans lequel on dépose un composé organométallique de magnésium sur un support polymère poreux à l'état divisé par imprégnation dudit support à l'aide d'une solution du composé de magnésium, dans un solvant inerte ne dissolvant pas le support, puis évaporation dudit solvant et l'on traite le support chargé du composé de magnésium au moyen d'une phase liquide renfermant au moins un composé d'un métal de transition choisi parmi Ti, V, Zr et Cr, lesdites opérations étant effectuées à des températures inférieures au point de ramollissement du support polymère, et il se caractérise en ce que l'on soumet le support chargé du composé de magnésium, avant ou après son traitement par le composé de métal de transition, à une chloration effectuée, en l'absence de solvant et à une température inférieure à la température de ramollissement du support polymère, au moyen d'un agent de chloration gazeux ou liquide utilisé en quantité au moins égale à la quantité stoechiométrique pour une chloration complète des composés organométalliques présents au sein du support.

Selon une forme préférée de mise en oeuvre du procédé suivant l'invention, l'imprégnation du support

polymère par la solution du composé de magnésium est réalisée en une ou plusieurs étapes en utilisant dans chaque étape un volume de solution de composé de magnésium tel que le produit résultant de la mise en contact dudit support polymère avec ledit volume de solution conserve la forme d'une masse solide à l'état divisé et en effectuant une évaporation du solvant inerte à l'issue de chacune des étapes d'imprégnation.

Le support polymère poreux à l'état divisé utilisable dans le procédé suivant l'invention est choisi parmi les poudres de polymères thermoplastiques présentant une porosité et une granulométrie convenables, lesdits polymères étant de préférence exempts de groupements réactifs susceptibles de réagir avec le composé de magnésium et/ou le composé de métal de transition ou de conduire à des réticulations pouvant entraîner une dégradation des propriétés du support.

La granulométrie de la poudre de support polymère correspond à un diamètre moyen de particules allant avantageusement de 1 à 5000 microns et de préférence de 40 à 2500 microns. Par "diamètre moyen" des particules, on entend le diamètre correspondant à la valeur 50 % sur la courbe de répartition granulométrique pondérale cumulée des particules de la poudre.

La poudre de support polymère présente une porosité correspondant à un volume poreux, mesuré au porosimètre à mercure dans un domaine de rayons de pores entre 5 et 7500 nm, allant de 0,005 à 3 $cm^3/g$, plus particulièrement de 0,01 à 1,5 $cm^3/g$ et de préférence de 0,02 à 0,8 $cm^3/g$.

On donne la préférence aux poudres de polymères support présentant une porosité homogène jusqu'au coeur des grains les constituant. Ceci favorise une distribution homogène du dérivé chloré de magnésium, formé au cours de l'étape de chloration, au sein du support.

Des supports polymères préférés sont constitués de poudres de polymères thermoplastiques tels que polystyrène et tout particulièrement polyoléfines comme polyéthylène haute densité, polyéthylène basse densité radicalaire, polypropylène, copolymères d'éthylène et d'une ou plusieurs alpha-oléfines en $C_3$ à $C_{12}$ connus sous le nom de polyéthylènes linéaires basse densité, qui présentent une granulométrie et une porosité situées dans les intervalles définis précédemment.

Préalablement à l'opération de dépôt du composé de magnésium sur le support polymère à l'état divisé, on peut soumettre ledit support à un ou plusieurs prétraitements.

Un premier prétraitement du support consiste à le soumettre à une opération de dégazage et de séchage par traitement à l'azote et/ou par action du vide.

Un autre prétraitement du support consiste à mettre ledit support en contact avec un composé organométallique d'un métal appartenant aux groupes I à III du Tableau Périodique des Eléments autre que le magnésium. Conviennent en particulier dans ce but les composés organométalliques du lithium, du sodium, du zinc et de l'aluminium et notamment les composés alcoylés de ces métaux. Une première série de tels composés est constituée par les alcoylaluminium de formule $AlR_xCl_{(3-x)}$ dans laquelle R représente un radical alcoyle en $C_1$ à $C_{12}$, et plus particulièrement en $C_2$ à $C_8$, et x est un nombre tel que $1 \leqslant x \leqslant 3$, comme par exemple triéthylaluminium, tri isobutylaluminium, tri n-hexylaluminium, tri n-octylaluminium, chlorure d'aluminium diéthyle et sesquichlorure d'aluminium éthyle. Une autre série de composés pour ledit prétraitement est formée par les composés aluminoxanes répondant à la formule

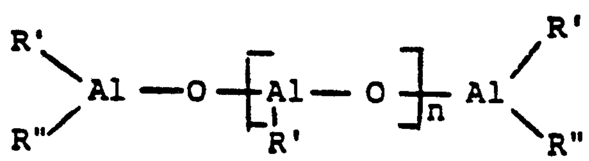

dans laquelle R′ désigne un radical alcoyle en $C_1$ à $C_{16}$, et de préférence en $C_1$ à $C_{12}$, les R″ forment ensemble un radical bivalent -O- ou désignent chacun un radical R′ et n est un nombre entier prenant les valeurs de 0 à 20 et de préférence de 0 à 12. Les composés aluminoxanes préférés sont ceux pour lesquels, dans la formule les définissant, R′ et R″ désignent chacun un radical alcoyle en $C_1$ à $C_6$ et n est un nombre entier allant de 0 à 8. A titre d'exemples de tels composés on peut citer le tétraisobutyldialuminoxane (R′ = R″ = isobutyle; n = 0) et l'hexaisobutyl tétraaluminoxane (R′ = R″= isobutyle; n = 2).

Le prétraitement du support par le composé organométallique est réalisé par mise en contact dudit support soit avec une solution du composé organométallique dans un solvant inerte ne dissolvant pas le polymère support et notamment dans un hydrocarbure aliphatique tel que pentane, hexane ou heptane, ou un hydrocarbure cycloaliphatique tel que cyclohexane ou méthylcyclohexane, soit, si on le désire, directement avec le composé organométallique lorsque ce dernier est liquide. Ladite mise en contact du support polymère avec la phase liquide constituée soit par la solution du composé organométallique dans un solvant inerte ou par le composé organométallique liquide est réalisée avantageusement, comme déjà indiqué pour l'imprégnation du support avec la solution du composé de magnésium, en une ou plusieurs étapes en utilisant dans chaque étape un volume de ladite phase liquide tel que le produit résultant de ladite mise en contact du support polymère avec ledit volume de phase liquide conserve la forme d'une masse solide à l'état divisé et en effectuant une évaporation du solvant à l'issue de chacune desdites étapes. Ledit prétraitement est effectué à une température inférieure au point de ramollissement du support et par exemple entre -40°C et +70°C.

On peut encore, à titre de prétraitement du support polymère, ajouter à ce dernier de 0,01 % à 8 % en poids d'une silice micronisée en tant qu'agent anti-mottage.

Le composé de magnésium, que l'on dépose sur le support polymère, répond avantageusement à la formule $Y_aMg_mX_b$, dans laquelle Y désigne un radical alcoyle ou alcoxy en $C_1$ à $C_{12}$, et de préférence en $C_1$ à $C_8$, X représente un radical Y ou un atome d'halogène, de préférence un atome de chlore, m est un nombre égal ou supérieur à 1, et a et b sont des nombres égaux ou supérieurs à zéro et tels que a + b = 2 m. Des exemples de tels composés sont notamment chlorure de magnésium éthyle, chlorure de magnésium butyle, di n-butylmagnésium, di-isobutylmagnésium, di n-hexylmagnésium, butyloctylmagnésium, di n-octylmagnésium, n-butyl éthylmagnésium, et $(C_4H_9)_3Mg_2(C_2H_5)$. Le composé de magnésium peut encore consister en un complexe constitué par le produit de réaction du composé $Y_aMg_mX_b$ avec un aluminium alcoyle de formule $Al(R)_3$, R ayant la signification donnée précédemment, ou un composé aluminoxane tel que défini plus haut, en quantités telles que le rapport du nombre de moles du composé de magnésium au nombre de moles du composé $Al(R)_3$ ou du composé aluminoxane soit compris entre 0,1 et 100 et se situe de préférence entre 0,2 et 50.

L'imprégnation par étapes du support polymère, éventuellement soumis à un ou plusieurs des prétraitements précités, par la solution du composé de magnésium, comme indiqué précédemment, est mise en oeuvre en utilisant une solution du composé de magnésium dans un solvant inerte ne dissolvant pas le support polymère, ledit solvant étant notamment un solvant du type hydrocarbure aliphatique ou cycloaliphatique tel que défini plus haut dans le cas du prétraitement du support, le solvant étant évaporé après chaque étape d'imprégnation, les opérations d'imprégnation du support et d'évaporation du solvant étant réalisées à des températures inférieures au point de ramollissement du support. En particulier l'imprégnation peut être réalisée entre -40°C et +60°C et de préférence à température ambiante tandis que l'évaporation du solvant peut être effectuée par stripage au moyen d'un gaz inerte tel que l'azote ou par distillation sous pression réduite à des températures allant de la température ambiante à +70°C.

Suivant l'invention le support imprégné par le composé de magnésium est soumis, avant ou après son traitement par le composé de métal de transition, à une chloration effectuée, en l'absence de solvant et à une température inférieure à la température de ramollissement du support polymère, au moyen d'un agent de chloration gazeux ou liquide utilisé en quantité au moins égale à la quantité stoechiométrique pour une chloration complète du composé de magnésium.

De préférence la quantité d'agent de chloration est telle que le rapport du nombre d'atomes de chlore fourni par l'agent de chloration au nombre d'atomes de magnésium déposé sur le support est compris entre 2 et 100.

Les températures utilisées pour la mise en oeuvre de la chloration sont plus particulièrement comprises entre -30°C et +70°C et se situent de préférence entre 10°C et 60°C.

Comme agents de chloration liquides ou gazeux dans les conditions de température préconisées ci-dessus conviennent notamment HCl anhydre, le chlore, $SOCl_2$, $SO_2Cl_2$, $SiCl_4$, $COCl_2$, NOCl, les chlorures d'acides de formule $R_1COCl$ et les chlorures d'hydrocarbyles de formule $R_1Cl$, dans lesquelles $R_1$ désigne un radical alcoyle en $C_1$ à $C_6$ ou un radical aryle, aralkyle ou alkaryle en $C_6$ à $C_{12}$, comme par exemple le chlorure d'acétyle et le chlorure de benzoyle, et les chlorosilanes de formule $(R_2)_tSiCl_{(4-t)}$ dans laquelle $R_2$ représente un atome d'hydrogène ou un radical $R_1$ défini plus haut et t est un nombre prenant les valeurs 1, 2 ou 3. L'agent de chloration est choisi plus particulièrement parmi ceux des agents de chloration précités qui aux températures utilisées pour la chloration ont une forte tension de vapeur ou mieux sont complètement gazeux, l'agent de chloration préféré étant HCl anhydre.

Lorsque l'agent de chloration est liquide aux températures utilisées pour la chloration, cette dernière peut être réalisée en mettant en contact le produit à chlorer avec des volumes successifs de l'agent de chloration de telle sorte que le mélange réactionnel formé par le produit à chlorer et l'agent de chloration reste sous la forme d'une masse solide à l'état divisé tout au long du traitement de chloration.

Si besoin est l'excès d'agent de chloration contenu dans le produit chloré peut être éliminé de ce dernier par balayage au moyen d'un gaz inerte comme l'azote.

Le produit chloré résultant de la mise en contact du support polymère imprégné du composé de magnésium avec l'agent de chloration gazeux ou liquide est ensuite traité par le composé de métal de transition à des températures inférieures au point de ramollissement du support polymère. Conviennent en particulier pour ce traitement des températures comprises entre -30°C et +70°C et de préférence se situant entre 10°C et 60°C. Le traitement du produit chloré par le composé de métal de transition peut être réalisé par mise en contact dudit produit chloré, aux températures précitées, avec une solution ou une suspension du composé de métal de transition dans un milieu liquide inerte ne dissolvant pas le support polymère et en particulier dans un hydrocarbure aliphatique tel que pentane, isopentane, hexane, heptane ou un hydrocarbure cycloaliphatique tel que cyclohexane ou méthylcyclohexane. On peut encore réaliser le traitement du produit chloré par le composé de métal de transition, lorsque ce dernier est liquide, en déposant ledit composé de métal de transition sur le produit chloré par entraînement à l'état de vapeurs.

Lorsque l'on traite le produit chloré par une solution ou suspension du composé de métal de transition dans un milieu liquide inerte ne dissolvant pas le support polymère, on opère de préférence en ajoutant ladite solution ou suspension au produit chloré en une ou plusieurs fois de telle sorte que la masse réactionnelle formée par ledit produit chloré et la solution ou suspension reste sous la forme d'une masse solide à l'état divisé durant toute la durée du traitement. A l'issue de chaque addition d'un volume de solution ou suspension au produit chloré, le liquide inerte apporté par la solution ou suspension et contenu dans la masse réactionnelle solide divisée est éliminé par balayage au moyen d'un gaz inerte comme l'azote ou par distillation sous pression réduite.

Le composé de métal de transition est choisi parmi les composés de Ti, V, Zr et Cr et de préférence parmi $TiCl_4$, $TiCl_3$, $VCl_4$, $VOCl_3$, $C_rCl_3$, $C_rO_3$, acétylacétonate de vanadium, acétylacétonate de chrome, et les composés de formules $Ti(OR)_pCl_{(4-p)}$ et $Zr(OR)_pCl_{(4-p)}$ dans lesquelles R désigne un radical alcoyle en $C_1$ à $C_{12}$ et de préférence en $C_2$ à $C_8$ et p est un nombre entier allant de 1 à 4.

Il est possible de réaliser en une seule étape la chloration et le traitement par le composé de métal de transition en choisissant comme agent de chloration $TiCl_4$ ou $VCl_4$ qui sont liquides aux températures utilisées pour la chloration.

Un donneur d'électrons consistant en une base de Lewis peut être également associé à la composante de métal de transition. Ceci peut être réalisé par mélangeage à l'issue de la préparation de ladite composante. On peut encore incorporer le donneur d'électrons à la composante de métal de transition en un point quelconque du processus d'obtention de cette dernière.

Le donneur d'électrons peut être avantageusement un composé mono- ou polyfonctionnel choisi parmi les acides carboxyliques aliphatiques ou aromatiques et leurs esters alcoyliques, les éthers aliphatiques ou cycliques, les cétones, les esters vinyliques, les dérivés acryliques et notamment acrylates ou méthacrylates d'alcoyle, et les silanes. Conviennent notamment comme donneurs d'électrons les composés tels que paratoluate de méthyle, benzoate d'éthyle, acétate d'éthyle ou de butyle, éther éthylique, para-anisate d'éthyle, tétrahydrofuranne, dioxane, acétone, méthylisobutylcétone, acétate de vinyle, méthacrylate de méthyle et phényltriéthoxysilane.

Dans la préparation de la composante de métal de transition, les quantités de composé de magnésium, de composé de métal de transition et de support polymère à l'état divisé sont telles que la composante de métal de transition produite renferme en poids de 0,01 % à 10 % et de préférence de 0,2 % à 5 % de magnésium et présente un rapport du nombre d'atomes de magnésium au nombre d'atomes de métal de transition allant de 0,5 à 100 et de préférence de 2 à 50.

La quantité du donneur d'électrons, éventuellement présent, peut varier assez largement. Elle se situe avantageusement dans un intervalle tel que le rapport du nombre d'atomes de magnésium de la composante de métal de transition au nombre de molécules de donneur d'électrons soit compris entre 0,5 et 200 et de préférence entre 1 et 100.

La composante de métal de transition sur support polymère, préparée comme indiqué précédemment est utilisable en association avec un cocatalyseur choisi parmi les composés organométalliques des métaux des groupes I à III du Tableau périodique des Eléments pour constituer un système catalytique approprié pour la polymérisation des oléfines.

Le cocatalyseur, associé à la composante de métal de transition, est choisi en particulier parmi les composés organomagnésium de formule $Y_aMg_mX_b$, l'isoprénylaluminium, les aluminoxanes définis précédemment et les composés organoaluminium de formule $Al(R''')_qMrHs$ dans laquelle M représente Cl ou OR''', R''' désigne un radical alcoyle en $C_1$ à $C_{16}$, et de préférence en $C_1$ à $C_{12}$, tandis que q, r et s sont des nombres tels que $1 \leqslant q \leqslant 3$, $0 \leqslant s \leqslant 2$ et $0 \leqslant r \leqslant 2$ avec $q + r + s = 3$. De préférence le cocatalyseur est choisi parmi l'isoprénylaluminium, les composés organomagnésium de formule $Y_aMg_mX_b$ et les composés organoaluminium de formule $AlR_xCl_{(3-x)}$, dans laquelle R désigne un radical alcoyle en $C_1$ à $C_{12}$, de préférence en $C_2$ à $C_8$, et x est un nombre tel que $1 \leqslant x \leqslant 3$. Des exemples de ces composés sont tels que triéthylaluminium, tri isopropylaluminium, tri isobutylaluminium, tri n-hexylaluminium, tri n-octylaluminium, chlorure de diéthylaluminium, isoprénylaluminium, dibutylmagnésium, di n-hexylmagnésium, butyloctylmagnésium.

La composante de métal de transition et le cocatalyseur sont associés dans des proportions telles que le rapport du nombre d'atomes de métal des groupes I à III du Tableau Périodique des Eléments contenu dans le cocatalyseur au nombre d'atomes de métal de transition de ladite composante se situe entre 0,5 et 1000 et de préférence entre 1 et 400.

Le système catalytique peut être préformé, par mise en contact de la composante de métal de transition avec le cocatalyseur, avant d'être amené au contact des oléfines à polymériser. On peut également ajouter la composante de métal de transition et le cocatalyseur séparément dans la zone de polymérisation des oléfines pour former le système catalytique in situ.

Que la composante de métal de transition renferme ou non un donneur d'électrons, on peut ajouter un tel composé, choisi parmi les donneurs d'électrons définis précédemment, au système catalytique résultant de l'association du cocatalyseur avec la composante de métal de transition ou encore au cocatalyseur avant la mise en contact de ce dernier avec la composante de métal de transition pour former le système catalytique, ou bien mettre en contact simultanément le donneur d'électrons avec les deux autres composantes du système catalytique. La quantité de donneur d'électrons est avantageusement telle que le rapport du nombre d'atomes de métal des groupes I à III du Tableau Périodique des Eléments, et notamment d'aluminium ou de magnésium, issus du cocatalyseur au nombre de molécules de donneur d'électrons se situe entre 1 et 50.

Les oléfines susceptibles d'être polymérisées ou copolymérisées au moyen du système catalytique résultant de l'association de la composante de métal de transition suivant l'invention avec le cocatalyseur et éventuellement un donneur d'électrons tels que définis plus haut, incluent non seulement les hydrocarbures en $C_2$ à $C_{18}$ présentant une insaturation éthylénique unique, et en particulier les mono-oléfines en $C_2$ à $C_{18}$ telles qu'éthylène, propène, butène-1, pentène-1, hexène-1, méthyl-4 pentène-1, octène-1, décène-1, dodécène-1, tridécène-1, hexadécène-1, octadécène-1, mais encore les diènes conjugués ou non conjugués, notamment butadiène, isoprène, hexadiène-1,4, hexadiène-1,5, vinylnorbornène, éthylidènenorbornène.

Le système catalytique précité est tout particulièrement utilisable pour la polymérisation des mono-oléfines

en $C_2$ à $C_{12}$, comme par exemple éthylène, propène, butène-1 et hexène-1.

On peut notamment polymériser une mono-oléfine unique en $C_2$ à $C_{12}$, par exemple éthylène, propène, butène-1 hexène-1, au contact du système catalytique en vue de produire l'homopolymère correspondant à cette mono-oléfine.

On peut encore polymériser des mélanges d'au moins deux oléfines en $C_2$ à $C_{12}$ au contact dudit système catalytique, en vue de produire des copolymères desdites oléfines. On peut notamment polymériser des mélanges d'éthylène et d'une ou plusieurs alpha-oléfines en $C_3$ à $C_{12}$, lesdits mélanges, lorsqu'ils sont au contact du systèmne catalytique, renfermant une proportion molaire globale d'alpha-oléfines en $C_3$ à $C_{12}$ comprise entre 0,1 et 90 % et de préférence entre 1 et 60 %

On peut également polymériser des mélanges de propène avec l'éthylène et/ou une ou plusieurs alpha-oléfines en $C_4$ à $C_{12}$, lesdits mélanges, lorqu'ils sont au contact du système catalytique, renfermant une proportion molaire globale d'éthylène et/ou d'alpha-oléfines en $C_4$ à $C_{12}$ comprise entre 0,1 et 90 % et de préférence entre 1 et 60 %.

On peut encore polymériser des mélanges d'éthylène et de propène, avec ou sans autres alpha-oléfines ou dioléfines, tels que le rapport molaire éthylène : propène soit compris entre 0,02 et 50 et de préférence entre 0,05 et 1.

La polymérisation des oléfines précitées, et en particulier des mono-oléfines en $C_2$ à $C_{12}$ prises seules ou en mélanges, comme indiqué plus haut, au moyen du système catalytique défini précédemment peut être mise en oeuvre en suspension dans un milieu liquide inerte, et notamment dans un hydrocarbure aliphatique tel que n-heptane, n-hexane, isobutane, ou encore dans l'une au moins des oléfines à polymériser maintenue à l'état liquide ou hypercritique.

Les conditions opératoires, notamment températures, pressions, quantité de système catalytique, pour ces polymérisations en phase liquide sont celles, qui sont habituellement proposées pour des cas similaires faisant appel à des systèmes catalytiques conventionnels de type Ziegler Natta supporté ou non.

Par exemple pour une polymérisation conduite en suspension dans un milieu liquide inerte, on opère à des températures inférieures à la température de dissolution ou éventuellement de ramollissement du polymère dans ledit milieu et sous des pressions voisines de la pression atmosphérique ou supérieures à cette dernière. Dans le cas d'une polymérisation en milieu propène liquide, les pressions peuvent être comprises entre la pression atmosphérique et 50 bars et les températures ont des valeurs telles que ledit milieu forme une phase liquide à la pression de polymérisation.

Le système catalytique obtenu par association de la composante de métal de transition suivant l'invention avec un cocatalyseur et éventuellement un donneur d'électrons tels que définis plus haut, peut être encore utilisé pour la polymérisation en phase gazeuse des oléfines ou des mélanges d'oléfines, qui viennent d'être cités. En particulier on peut polymériser en phase gazeuse, au contact dudit système catalytique, un mélange d'éthylène et d'une ou plusieurs alpha-oléfines en $C_3$ à $C_{12}$ telles que propène, butène-1, hexène-1, méthyl-4 pentène-1 et octène-1, renfermant, lorsqu'il est au contact du système catalytique, une proportion molaire de l'alpha-oléfine ou des alpha-oléfines en $C_3$ à $C_{12}$ comprise entre 0,1 et 90 %, et de préférence entre 1 et 60 %, en vue de produire un copolymère éthylène/alpha-oléfine à teneur molaire minoritaire en alpha-oléfine en $C_3$ à $C_{12}$, connu sous le nom de polyéthylène linéaire basse densité.

La polymérisation en phase gazeuse de l'oléfine ou des oléfines au contact du système catalytique peut être effectuée dans tout réacteur permettant une polymérisation en phase gazeuse et en particulier dans un réacteur à lit agité ou à lit fluidisé. Les conditions de mise en oeuvre de la polymérisation en phase gazeuse, notamment température, pression, injection de l'oléfine ou des oléfines dans le réacteur à lit agité ou à lit fluidisé, contrôle de la température et de la pression de polymérisation, sont analogues à celles proposées dans l'art antérieur pour la polymérisation en phase gazeuse des oléfines. On opère généralement à une température inférieure au point de fusion Tf du polymère ou copolymère à synthétiser, et plus particulièrement comprise entre -20°C et (Tf-5)°C, et sous une pression telles que l'oléfine ou les oléfines, et éventuellement les autres monomères hydrocarbonés présents dans le réacteur soient essentiellement en phase vapeur.

La polymérisation en suspension ou en phase gazeuse peut être réalisée en présence d'un agent de transfert de chaînes, notamment hydrogène ou encore alcoyl zinc tel que zinc diéthyle, de manière à contrôler l'indice de fusion du polymère ou copolymère à produire. L'agent de transfert de chaînes préféré est l'hydrogène, que l'on utilise en quantité pouvant aller jusqu'à 80 %, et se situant de préférence entre 0,1 et 40 % du volume de l'ensemble oléfines et hydrogène amené au réacteur.

La composante de métal de transition suivant l'invention peut encore être utilisée comme composante de métal de transition pour la préparation du solide hydrocarboné actif, utilisable pour polymériser des olèfines, tel que défini dans la demande de brevet français N°8 303 229 du 28 Février 1983 au nom de la demanderesse.

L'invention est illustrée par les exemples suivants donnés à titre non limitatif.

**Exemple 1**

On opérait dans un réacteur en verre de 1 litre équipé d'un dispositif d'agitation et muni d'une double enveloppe parcourue par un fluide caloporteur pour le maintien du réacteur en température.

Dans le réacteur séché et maintenu sous atmosphère d'azote, on introduisait 30 g d'une poudre, séchée et

dégazée à l'azote, de polyéthylène basse densité linéaire, ladite poudre présentant un diamètre moyen de particules égal à 85 microns et un volume poreux de 0,2 $cm^3/g$.

Au contenu du réacteur maintenu sous agitation à 40°C on ajoutait 10 $cm^3$ d'une solution de dibutylmagnésium dans l'heptane renfermant 30,3 g de magnésium par litre, ladite solution étant injectée dans le réacteur en deux fractions de 5 $cm^3$ et chacune des additions de solution étant suivie d'un stripage de l'heptane par un courant d'azote.

On amenait le réacteur à température ambiante et, tout en maintenant l'agitation, on procédait à la chloration de la poudre chargée du composé de magnésium par injection d'HCl anhydre dans le réacteur à raison de 0,6 mole/heure pendant 40 minutes. L'excès d'HCl retenu dans la poudre était ensuite éliminé par balayage à l'aide d'un courant d'azote.

Le réacteur était alors réchauffé à 44°C et en maintenant cette température on ajoutait goutte à goutte au contenu du réacteur 3 $cm^3$ d'une solution de $TiCl_4$ dans l'heptane, ladite solution renfermant 55,2 g de titane par litre. Après 20 minutes d'homogénéisation par agitation, l'heptane résiduel contenu dans la poudre était éliminé par balayage à l'azote.

Au cours des différentes opérations précitées, le contenu du réacteur conservait la forme d'une masse solide pulvérulente.

On obtenait alors un produit pulvérulent formant la composante de métal de transition, ledit produit ayant la granulométrie de la poudre de départ et renfermant, en poids 0,44 % de Ti, 1,04 % de Mg et 3,05 % de chlore. Ce produit était stocké en boîte à gants en atmosphère inerte.

**Exemple 2**

On opérait dans un réacteur analogue à celui décrit dans l'exemple 1.

Dans le réacteur séché et maintenu sous atmosphère d'azote, on introduisait 50,3 g d'une poudre, sèche et dégazée à l'azote, de polyéthylène basse densité linéaire, ladite poudre ayant un diamètre moyen de particules égal à 85 microns et un volume poreux de 0,2 $cm^3/g$.

Au contenu du réacteur maintenu sous agitation à 40°C on ajoutait 20 $cm^3$ d'une solution de dibutylmagnésium dans l'heptane renfermant 30,3 g de magnésium par litre, ladite solution étant injectée dans le réacteur en deux fractions de 10 $cm^3$ et chacune des additions de solution étant suivie d'un stripage de l'heptane emprisonné dans la poudre par un courant d'azote.

On amenait le réacteur à température ambiante et, tout en maintenant l'agitation, on procédait à la chloration de la poudre chargée du composé de magnésium par injection d'HCl anhydre dans le réacteur à raison de 0,6 mole/heure pendant 40 minutes. L'excès d'HCl contenu dans la poudre était ensuite éliminé par balayage à l'aide d'un courant d'azote.

Au contenu du réacteur, toujours maintenu à température ambiante et sous agitation, on ajoutait alors 105 $cm^3$ d'une suspension de $TiCl_4$ dans l'isopentane résultant du mélange de 100 $cm^3$ d'isopentane avec 5 $cm^3$ d'une solution de $TiCl_4$ dans l'heptane, cette solution renfermant 0,714 mole de $TiCl_4$ par litre, puis le contenu du réacteur était encore agité pendant 1 heure.

A l'issue de cette période, le contenu du réacteur était filtré et le produit solide résultant de cette filtration était soumis à un balayage par un courant d'azote pour striper l'isopentane et l'heptane résiduels jusqu'à l'obtention d'une poudre s'écoulant librement.

Le produit pulvérulent ainsi obtenu, qui constitue la composante de métal de transition, avait une granulométrie correspondant à celle de la poudre de départ et renfermait, en poids, 0,116 % de Ti, 1,09 % de Mg et 3,1 % de Cl. Ce produit était stocké en boîte à gants sous atmosphère d'azote.

**Exemple 3**

On opérait dans un réacteur analogue à celui utilisé dans l'exemple 1.

Dans le réacteur séché et maintenu sous atmosphère d'azote, on introduisait 30,3 g d'une poudre, sèche et dégazée à l'azote, de polyéthylène basse densité linéaire, ladite poudre ayant un diamètre moyen de particules égal à 85 microns et un volume poreux de 0,2 $cm^3/g$.

Au contenu du réacteur, maintenu sous agitation à 40°C, on ajoutait 18,5 $cm^3$ d'une solution de dibutylmagnésium dans l'heptane renfermant 30,3 g de magnésium par litre, ladite solution étant injectée dans le réacteur en quatre fractions égales et chacune des additions de solution étant suivie d'un stripage de l'heptane par un courant d'azote.

On amenait ensuite le réacteur à température ambiante et, tout en maintenant cette température et une certaine agitation du contenu du réacteur, on procédait à la chloration de la poudre chargée du composé de magnésium par injection d'HCl anhydre dans le réacteur à raison de 0,6 mole/heure pendant 40 minutes. L'excès d'HCl n'ayant pas réagi était éliminé par balayage à l'aide d'un courant d'azote.

On connectait alors au réacteur un dispositif bulle à bulle renfermant 5 $cm^3$ de $TiCl_4$ pur et, en maintenant le réacteur sous agitation à une température de 40°C, on entraînait dans ledit réacteur le $TiCl_4$ contenu dans le

dispositif bulle à bulle par stripage effectué à 40°C au moyen d'un courant d'azote. A la fin de l'opération de stripage 4,8 $cm^3$ de $TiCl_4$ étaient passés sous forme de vapeurs dans le réacteur.

A l'issue de cette opération le contenu du réacteur était encore maintenu sous agitation pendant 15 minutes.

On obtenait un produit pulvérulent constituant la composante de métal de transition, ledit produit ayant une granulométrie correspondant à celle de la poudre de départ et renfermant, en poids, 0,094 % de Ti, 1,7 % de Mg et 5 % de Cl. Ce produit était stocké en boîte à gants sous atmosphère d'azote.

**Exemple 4**

On opérait dans un réacteur analogue à celui utilisé dans l'exemple 1.

Dans le réacteur séché et maintenu sous atmosphère d'azote, on introduisait 30,2 g de poudre, sèche et dégazée à l'azote, de polyéthylène basse densité linéaire, ladite poudre ayant un diamètre moyen de particules égal à 90 microns et un volume poreux de 0,2 $cm^3/g$.

Au contenu du réacteur, maintenu sous agitation à 40°C, on ajoutait 30 $cm^3$ d'une solution dans l'heptane d'un complexe de dibutylmagnésium et de triéthylaluminium commercialisé sous le nom de MAGALA® 7,5 et présentant un rapport molaire dibutylmagnésium : triéthylaluminium égal à 7,5 : 1, ladite solution renfermant 10,9 g de magnésium et 1,6 g d'aluminium par litre. L'injection du volume précité de cette solution dans le réacteur était réalisé en six fractions de 5 $cm^3$, chaque addition étant suivie d'un stripage de l'heptane par un courant d'azote.

On amenait ensuite le réacteur à température ambiante et, tout en maintenant cette température et une certaine agitation du contenu du réacteur, on procédait à la chloration de la poudre chargée du composé de magnésium et d'aluminium par injection d'HCl anhydre dans le réacteur à raison de 0,6 mole/heure pendant 40 minutes. L'HCl n'ayant pas réagi était éliminè par balayage à l'azote.

Au contenu du réacteur, toujours maintenu à température ambiante et sous agitation modérée, on ajoutait 6 $cm^3$ d'une solution de $TiCl_4$ dans l'hexane, ladite solution renfermant 0,667 mole de $TiCl_4$ par litre.

On amenait ensuite le réacteur à une température de 40°C et soumettait le contenu du réacteur, maintenu à ladite température, à un stripage à l'aide d'un courant d'azote pour éliminer l'hexane.

Au cours des diverses opérations précitées, le produit contenu dans le réacteur conservait la forme d'une masse solide à l'état divisé s'écoulant librement.

Le produit pulvérulent obtenu, qui constitue la composante de métal de transition, avait une granulométrie correspondant à celle de la poudre de départ et renfermait, en poids, 0,18 % de Ti, 1,08 % de Mg et 4,46 % de Cl. Ce produit était stocké en boîte à gants sous atmosphère d'azote.

**Exemple 5**

On opérait dans un réacteur analogue à celui utilisé dans l'exemple 1.

Dans le réacteur séché et maintenu sous atmosphère d'azote, on introduisait 50 g de poudre, séchée sous vide, de polyéthylène basse densité linéaire, ladite poudre ayant un diamètre moyen de particules égal à 680 microns et présentant un volume poreux de 0,2 $cm^3/g$.

Au contenu du réacteur, maintenu sous agitation à une température de 40°C, on ajoutait 7,8 $cm^3$ d'une solution d'hexa isobutyltétra aluminoxane dans l'hexane, ladite solution renfermant en poids 20 % du composé aluminoxane soit 4,35 % d'aluminium, puis après homogénéisation du milieu sous l'effet de l'agitation on éliminait l'hexane par stripage au moyen d'un courant d'azote.

On ajoutait alors au contenu du réacteur, toujours maintenu à 40°C sous agitation, 5 $cm^3$ d'une solution de n-butyléthylmagnésium (formule: $(n\text{-}C_4H_9)Mg(C_2H_5)$) dans l'heptane, ladite solution renfermant 32,2 g de magnésium par litre, puis après homogénéisation du milieu l'heptane était éliminé par stripage à l'aide d'un courant d'azote.

On amenait ensuite le réacteur à température ambiante et, tout en maintenant cette température et une agitation modérée du contenu du réacteur, on procédait à la chloration de la poudre, traitée par le composè aluminoxane et chargée de composé de magnésium, par injection d'HCl anhydre dans le réacteur à raison de 0,6 mole/heure pendant 50 minutes. L'HCl n'ayant pas réagi était éliminé par balayage à l'azote du contenu du réacteur, après avoir réchauffé ce dernier à 40°C.

Au contenu du réacteur, maintenu à 40°C sous agitation modérée, on ajoutait, goutte à goutte, 5 $cm^3$ d'une solution de $TiCl_4$ dans l'heptane, ladite solution renfermant 38,4 g de $TiCl_4$ par litre, puis après homogénéisation du milieu on éliminait l'heptane par stripage au moyen d'azote.

Le produit pulvérulent contenu dans le réacteur, qui constituait la composante de métal de transition, était alors additionné de 6 $cm^3$, ajoutés en deux fractions de 3 $cm^3$, d'une solution de triéthylaluminium à 50 % en volume dans l'heptane. A l'issue de cette addition et après homogénéisation du milieu, l'heptane résiduel était éliminé par stripage au moyen d'un courant d'azote.

Le produit obtenu, constitué de la composante de métal de transition activée par le triéthylaluminium ajouté en tant que cocatalyseur, forme un système catalytique complet susceptible de polymériser les oléfines.

Ledit système catalytique avait une granulométrie comparable à celle du polymère support de départ et renfermait, en poids, 0,093 % de Ti, 0,32 % de Mg et 2 % de Cl et présentait un rapport du nombre d'atomes d'aluminium, apportés par le triéthylaluminium utilisé comme cocatalyseur, au nombre d'atomes de titane égal à 20. Ledit système catalytique était stocké en boîte à gants sous atmosphère d'azote.

Au cours des diverses opérations précitées conduisant à passer du support polymère pulvérulent au système catalytique, le produit contenu dans le réacteur conservait la forme d'une masse solide divisée s'écoulant librement.

**Exemple 6**

On opérait dans un réacteur horizontal, du type mélangeur à ruban, d'une capacité de 3,5 litres.

Dans le réacteur séché et maintenu sous atmosphère d'azote, on introduisait 500 g d'une poudre, préalablement séchée sous vide, d'un polyéthylène haute densité ayant un indice de fusion égal à 7 et une densité de 0,960, ladite poudre ayant un diamètre moyen de particules égal à 190 microns et un volume poreux de 0,11 $cm^3/g$.

Au contenu du réacteur, maintenu à 50° C, on ajoutait, goutte à goutte en 30 minutes, 73 $cm^3$ d'une solution de dibutylmagnésium dans l'heptane, ladite solution renfermant 30,3 g de magnésium par litre, puis après homogénéisation du contenu du réacteur par agitation pendant 1 heure, on éliminait l'heptane par stripage à l'aide d'un courant d'azote pendant 3 heures.

On amenait ensuite le réacteur à température ambiante et, tout en maintenant cette température et une certaine agitation du contenu du réacteur, on procédait à la chloration de la poudre chargé du composé de magnésium par injection d'HCl anhydre dans le réacteur à raison de 0,6 mole/heure pendant 1 heure. L'HCl n'ayant pas réagi était éliminé par balayage à l'azote pendant 1 heure.

On réchauffait alors le réacteur à 50° C et ajoutait goutte à goutte au contenu dudit réacteur, en maintenant ladite température et une certaine agitation, 38 $cm^3$ d'une solution de $TiCl_4$ dans l'heptane, ladite solution étant formée par 13,2 g de $TiCl_4$ dilué par 250 $cm^3$ d'heptane. A l'issue de cette addition, le milieu pulvérulent était homogénéisé par agitation pendant 30 minutes.

Le produit pulvérulent contenu dans le réacteur, qui formait la composante de métal de transition, était alors additionné, en maintenant le milieu sous agitation à la température de 50° C, de 60 $cm^3$ d'une solution de triéthylaluminium à 50 % en volume dans l'heptane, ledit volume de solution étant ajouté goutte à goutte en deux fractions de 30 $cm^3$ chacune. L'addition de chaque fraction était suivie d'une homogénéisation par agitation et d'un stripage de l'heptane au moyen d'un courant d'azote.

Le produit obtenu, résultant de l'activation de la composante de métal de transition par le triéthylaluminium, forme un système catalytique susceptible à lui seul de polymériser les oléfines.

Ledit système catalytique avait une granulométrie comparable à celle de la poudre de départ et renfermait, en poids, 0,065 % de Ti, 0,39 % de Mg et 1,37 % de chlore et présentait un rapport du nombre d'atomes d'Al, apportés par le triéthylaluminium, au nombre d'atomes de Ti égal à 20. Ce système catalytique était stocké en boîte à gants sous atmosphère d'azote.

Au cours des diverses opérations conduisant à passer du support polymère pulvérulent au système catalytique, le produit contenu dans le réacteur conservait la forme d'une masse solide divisée s'écoulant librement.

**Exemple 7**

On opérait dans un réacteur analogue à celui utilisé dans l'exemple 1.

Dans le réacteur séché et maintenu sous atmosphère d'azote, on introduisait 50 g d'une poudre d'un polypropylène ayant un indice de fusion égal à 2, ladite poudre ayant été préalablement séchée par dégazage sous vide à température ambiante pendant 2 heures et présentant un diamètre moyen de particules égal à 250 microns et un volume poreux de 0,10 $cm^3/g$.

Au contenu du réacteur, maintenu à 50° C sous agitation, on ajoutait goutte à goutte 10,8 $cm^3$ d'une solution de di-n-hexylmagnésium dans l'heptane, ladite solution renfermant 18 g de magnésium par litre, puis après homogénéisation du contenu du réacteur par agitation pendant 20 minutes, on éliminait l'heptane par stripage à l'aide d'un courant d'azote pendant 1 heure.

On amenait ensuite le réacteur à température ambiante et, tout en maintenant cette température et une certaine agitation du contenu du réacteur, on procédait à la chloration de la poudre chargée du composé de magnésium par injection d'HCl anhydre dans le réacteur à raison de 0,6 mole/heure pendant 40 minutes. L'HCl n'ayant pas réagi était éliminé par stripage au moyen d'azote.

On réchauffait alors le réacteur à 50° C et ajoutait goutte à goutte au contenu dudit réacteur, en maintenant ladite température et une agitation modérée, 4 $cm^3$ d'une solution de $TiCl_4$ dans l'heptane, ladite solution étant formée en diluant 13,2 g de $TiCl_4$ par 250 $cm^3$ d'heptane. A l'issue de cette addition, le milieu pulvérulent était homogénéisé par agitation pendant 15 minutes, puis soumis à un balayage par un courant d'azote pour éliminer

l'heptane résiduel.

Le produit pulvérulent contenu alors dans le réacteur, qui constituait la composante de métal de transition, était alors additionné, en maintenant le milieu à la température de 50°C et sous agitation, de 3 cm³ d'une solution de triéthylaluminium à 50 % en volume dans l'heptane, ledit volume de solution étant ajouté goutte à goutte au contenu du réacteur. A la suite de cette addition, le contenu du réacteur était homogénéisé pendant 15 minutes par agitation puis l'heptane résiduel était éliminé par stripage au moyen d'un courant d'azote.

Le produit obtenu, résultant de l'activation de la composante de métal de transition par le triéthylaluminium forme un système catalytique susceptible de polymériser à lui seul les oléfines.

Ledit système catalytique avait une granulométrie correspondant à celle de la poudre de polypropylène de départ et renfermait, en poids, 0,08 % de Ti, 0,39 % de Mg et 1,25 % de Cl et présentait un rapport du nombre d'atomes d'Al, apportés par le triéthylaluminium, au nombre d'atomes de Ti égal à 30. Ce système catalytique était stocké en boîte à gants en atmosphère inerte.

Au cours des opérations conduisant à passer du support polymère pulvérulent au système catalytique, le produit contenu dans le réacteur conservait la forme d'une masse solide divisée s'écoulant librement.

**Exemple 8**

On opérait dans un réacteur analogue à celui utilisé dans l'exemple 1.

Dans le réacteur séché et maintenu sous atmosphère d'azote, on introduisait 50 g d'une poudre, sèche et dégazée sous azote, de polyéthylène basse densité linéaire, ladite poudre ayant un diamètre moyen de particules égal à 680 microns et présentant un volume poreux de 0,2 cm³/g.

Au contenu du réacteur, maintenu sous agitation à une température de 45°C, on ajoutait 3 cm³ de tri n-hexylaluminium pur, puis homogénéisait le milieu par agitation pendant 30 minutes.

On introduisait alors dans le réacteur, ramené à 40°C et maintenu sous agitation, 9,9 cm³ d'une solution de butyloctylmagnésium dans l'heptane, ladite solution renfermant 21 g de magnésium par litre, puis après homogénéisation du milieu on éliminait l'heptane résiduel par stripage au moyen d'un courant d'azote. Le composé butyloctylmagnésium répond à la formule moyenne $(n\text{-}C_4H_9)_{1,5}\,(n\text{-}C_8H_{17})_{0,5}Mg$.

On amenait ensuite le réacteur à température ambiante et, tout en maintenant cette température et une agitation modérée du contenu du réacteur, on procédait à la chloration de la poudre, prétraitée par le composé d'aluminium et chargée du composé de magnésium, par injection d'HCl anhydre dans le réacteur à raison de 0,6 mole/heure pendant 60 minutes. L'HCl n'ayant pas réagi était éliminé par stripage à l'aide d'un courant d'azote.

Au contenu du réacteur, ramené à 45°C et maintenu à cette température sous agitation modérée, on ajoutait alors, goutte à goutte, 1,5 cm³ d'une solution de $TiCl_4$ dans l'heptane, ladite solution renfermant 0,72 mole de $TiCl_4$ par litre, puis après homogénéisation du milieu par agitation pendant 45 minutes, on éliminait l'heptane résiduel par stripage à l'aide d'un courant d'azote.

Le produit pulvérulent contenu alors dans le réacteur, qui constituait la composante de métal de transition, était additionné de 7 cm³ d'une solution de triéthylaluminium à 50 % en volume dans l'heptane, puis le milieu était homogénéisé par agitation pendant 20 minutes et l'heptane résiduel était alors éliminé par balayage par un courant d'azote pendant 45 minutes.

Le produit obtenu, constitué de la composante de métal de transition activée par le triéthylaluminium, qui forme un système catalytique susceptible de promouvoir la polymérisation des oléfines, avait une granulométrie correspondant à celle du polymère support de départ. Ledit système catalytique renfermait, en poids, 0,112 % de Ti, 0,415 % de Mg et 2,6 % de Cl et présentait un rapport du nombre d'atomes d'aluminium, apportés par le triéthylaluminium, au nombre d'atome de titane égal à 30. Ce système catalytique était stocké en boîte à gants sous atmosphère inerte.

Au cours des opérations conduisant à passer du support polymère pulvérulent au système catalytique, le produit contenu dans le réacteur gardait la forme d'une masse solide pulvérulente s'écoulant librement.

**Exemple 9**

On opérait dans un réacteur analogue à celui utilisé dans l'exemple 1.

Dans le réacteur séché et maintenu sous atmosphère d'azote, on introduisait 30,2g d'une poudre, sèche et dégazée sous azote, de polyéthylène basse densité linéaire, ladite poudre ayant un diamètre moyen de particules égal à 85 microns et un volume poreux de 0,2 cm³/g, ainsi que 1,68 g d'une poudre de silice pyrogénée préalablement séchée sous vide à 200°C, ladite poudre de silice étant celle commercialisée par la société DEGUSSA sous le nom AEROSIL® 200.

Au contenu du réacteur, maintenu sous agitation à 40°C, on ajoutait 17 cm³ d'une solution de dibutylmagnésium dans l'heptane, ladite solution renfermant 30,3 g de magnésium par litre. L'injection du volume précité de solution dans le réacteur était réalisé en quatre fractions égales, chaque addition étant suivie d'un stripage de l'heptane par un courant d'azote.

On amenait ensuite le réacteur à température ambiante et, tout en maintenant cette température et une agitation modérée du contenu du réacteur, on procédait à la chloration de la poudre chargée du composé de magnésium par injection d'HCl anhydre dans le réacteur à raison de 0,6 mole/heure pendant 40 minutes. L'HCl n'ayant pas réagi était éliminé par balayage à l'azote.

Au contenu du réacteur, ramené à 40°C et maintenu à cette température sous agitation modérée, on ajoutait alors, goutte à goutte, 8 $cm^3$ d'une solution de $TiCl_4$ dans l'heptane, ladite solution renfermant 0,485 mole de $TiCl_4$ par litre. A l'issue de cette addition, le contenu du réacteur était homogénéisé par agitation pendant 20 minutes puis l'heptane résiduel était éliminé par stripage au moyen d'un courant d'azote.

On obtenait un produit pulvérulent constituant la composante de métal de transition, ledit produit ayant une granulométrie correspondant à celle de la poudre de polymère servant de support et renfermant, en poids, 0,38 % de Ti, 1,42 % de Mg et 5,4 % de Cl. Ce produit était stocké en boîte à gants sous atmosphère d'azote.

Au cours des opérations conduisant à passer du support polymère pulvérulent à la composante de métal de transition, le produit contenu dans le réacteur gardait la forme d'une masse solide pulvérulente s'écoulant librement. La présence d'une faible quantité de silice pyrogénée dans la poudre apporte un effet anti-mottant et entraîne un écoulement amélioré de la masse pulvérulente aux différents stades de traitement de ladite masse.

**Exemple 10**

On effectuait une série d'essais de préparation de copolymères éthylène/butène-1, encore appelés polyéthylènes basse densité linéaires, par copolymérisation d'un mélange d'éthylène et de butène-1 en phase gazeuse en présence de systèmes catalytiques utilisant les composantes de métal de transition ou les systèmes catalytiques préparés dans les exemples précédents et désignés ci-après par "catalyseurs".

Les copolymérisations en phase gazeuse étaient réalisées dans un réacteur de 8,2 l équipé d'un agitateur tournant avec une vitesse de rotation de 400 tours/minute et maintenu à la température de 85°C pendant toute la durée de la copolymérisation.

Dans le réacteur, préalablement séché et mis sous vide, on introduisait successivement 1 bar absolu de butène-1, éventuellement une quantité appropriée de cocatalyseur, et à nouveau 1,5 bars absolus de butène-1, puis 1,5 bars absolus d'hydrogène et enfin 13 bars absolus d'éthylène. On introduisait alors dans ledit réacteur, par poussée avec 4 bars absolus d'azote, une quantité fixée de la composante de métal de transition ou du système catalytique obtenu dans les exemples précédents. On maintenait ensuite la pression dans le réacteur à la valeur de 21 bars absolus par injection d'éthylène et de butène-1 dans un rapport molaire butène-1 : éthylène égal à 0,0466.

En fin de réaction le réacteur était décomprimé, purgé à l'azote et refroidi. Le copolymère formé était récupéré sous la forme d'une poudre.

Les conditions opératoires spécifiques à chaque essai et les résultats obtenus sont rassemblés dans le Tableau ci-après.

**Tableau**

| N° de l'essai | I | II | III | IV | V | VI | VII | VIII |
|---|---|---|---|---|---|---|---|---|
| <u>CATALYSEUR</u>: | | | | | | | | |
| . Origine | Ex.1 | Ex. 2 | Ex. 3 | Ex. 4 | Ex. 6 | Ex. 7 | Ex. 8 | Ex. 9 |
| . Poids utilisé (g) | 0,3053 | 0,899 | 0,488 | 0,3434 | 3,009 | 3,55 | 7,8 | 0,8269 |
| . Diamètre moyen de particlues (microns) | 85 | 85 | 85 | 85 | 190 | 250 | 680 | |
| . Rapport atomique Al : Ti sur le catalyseur [a)] | 0 | 0 | 0 | 0 | 20 | 30 | 30 | 0 |
| <u>Cocatalyseur ajouté au milieu de polymérisation</u>: | | | | | | | | |
| . Nature | THA[b)] | THA + IPRA | IPRA[c)] | THA | THA | THA | - | THA |
| . Volume ($cm^3$) | 2 | 5[d)] + 5[d)] | 5[d)] | 1,2 | 0,8 | 0,9 | | 3 |
| <u>Durée de la polymérisation (heures)</u> | 3,5 | 2 | 1 | 1 | 4 | 4 | 3 | 4 |
| <u>Copolymères obtenus</u> | | | | | | | | |
| . Poids (g) | 835 | 495 | 80 | 225 | 1480 | 930 | 1065 | 1170 |
| . Productivité (g de (co)polymère/g de Ti): | 621600 | 474000 | 173000 | 364000 | 757000 | 327000 | 950900 | 372300 |
| . Densité | 0,9215 | 0,918 | 0,920 | 0,9215 | 0,920 | 0,920 | 0,916 | 0,922 |

| | | | | | | | | |
|---|---|---|---|---|---|---|---|---|
| . MVA ($g/cm^3$)[e] | 0,344 | 0,429 | 0,400 | 0,332 | 0,350 | 0,370 | 0,353 | 0,388 |
| . Diamètre moyen des particules du (co)polymère (microns) | 750 | 1300 | | 750 | 700 | 730 | 950 | 950 |
| . Indice de fusion (MI 2,16) | 0,7 | 1 | | 1 | 1,5 | 0,15 | 0,08 | 1,1 |
| . Indice de fluidité (MI 21,6) | 22,5 | 30 | | 33 | 51,9 | 6,8 | 3,5 | 4,1 |

a) : Al provient de l'addition de triéthylaluminium (en abrégé TEA) à la composante de métal de transition
b) : THA = tri n-hexylaluminium
c) : IPRA = isoprénylaluminium
d) : solutions à 18,6 g/l d'IPRA ou à 236 g/l THA dans l'heptane.
e) : MVA = masse molumique apparente

**Exemple 11**

On effectuait la synthèse d'un copolymère éthylène/butène-1/hexène-1, entrant dans la gamme des produits appelés polyéthylènes basse densité linéaires, par copolymérisation d'un mélange d'éthylène, de butène-1 et d'hexène-1 en phase gazeuse en utilisant un système catalytique faisant appel à la composante de métal de transition préparée dans l'exemple 9 associée à un cocatalyseur, à savoir le tri n-hexylaluminium.

La copolymérisation était effectuée dans un réacteur de 8,2 l équipé d'un agitateur tournant avec une vitesse de rotation de 400 tours/minute et maintenu à la température de 85°C pendant toute la durée de la copolymérisation.

Dans le réacteur, préalablement séché et mis sous vide, on introduisait successivement 1 bar absolu d'un mélange de butène-1 et d'hexène-1 dans un rapport molaire hexène-1 : butène-1 égal à 0,112, puis 3 $cm^3$ du cocatalyseur, à savoir tri n-hexylaluminium pur, 2 bars absolus du mélange précité de butène-1 et d'hexène-1, 1,5 bars absolus d'hydrogène et enfin 12,5 bars absolus d'éthylène.

Lorsque le contenu du réacteur arrivait à la température de 85°C, on injectait dans ledit réacteur 0,7438 g de la composante de métal de transition préparée dans l'exemple 9, cette injection étant réalisée par poussée à l'azote avec maintien du débit d'azote jusqu'à l'obtention d'une pression dans le réacteur égale à 21 bars absolus. On maintenait ensuite la pression dans le réacteur à cette valeur en injectant par heure 1000 litres normaux d'éthylène gazeux et 170 $cm^3$ d'un mélange liquide de butène-1 et d'hexène-1 dans un rapport molaire hexène-1 : butène-1 égal à 0,112, ce qui correspond à un rapport molaire butène-1 : éthylène égal à 0,036 et à un rapport molaire hexène-1 : éthylène égal à 0,0043.

Au bout de quatre heures on arrêtait l'injection des oléfines puis le réacteur était décomprimé, purgé à l'azote et refroidi.

On recueillait 1060 g de copolymère éthylène/butène-1/hexène-1 se présentant sous la forme d'une poudre ayant un diamètre moyen de particules égal à 900 microns.

Ledit copolymère avait une densité égale à 0,919 et une masse volumique apparente de 0,389 $g/cm^3$ et il présentait un indice de fusion (MI 2,16) et un indice de fluidité (MI 21,6) égaux respectivement à 1,9 et 61,2.

La productivité de cette synthèse correspondait à 375000 g de copolymère par g de Ti.

**Exemple 12**

On effectuait la synthèse d'un polyéthylène haute densité par polymérisation d'éthylène en suspension en utilisant un système catalytique faisant appel à la composante de métal de transition préparée dans l'exemple 8 associée à un cocatalyseur, à savoir le tri éthylaluminium.

Dans un ballon tricol en verre de 1 litre, préalablement purgé à l'azote, on introduisait 500 ml d'hexane et 2,5 millimoles de triéthylaluminium, puis après quelques minutes d'agitation 1,2 g de la composante de métal de transition préparée dans l'exemple 8.

La suspension ainsi réalisée était alors transférée, sous courant d'azote, dans un autoclave de 1,5 1, muni d'un système d'agitation et préalablement purgé à l'azote.

Une fois le transfert effectué, on mettait en marche l'agitation et le réacteur était amené à la température de 80°C. En maintenant cette température et l'agitation on introduisait alors dans l'autoclave de l'hydrogène jusqu'à atteindre une pression totale de 5,6 bars absolus puis de l'éthylène pour atteindre une pression totale de 12 bars absolus et l'on continuait ensuite l'injection d'éthylène pour maintenir la pression totale de l'autoclave à cette valeur de 12 bars.

Après 2 heures de réaction on arrêtait la polymérisation par décompression de l'autoclave et addition au

contenu de ce dernier d'un mélange de méthanol et d'HCl à 10 % en poids d'HCl.

Le polymère formé était recueilli par filtration puis séché.

On obtenait ainsi 90 g de polyéthylène haute densité présentant un indice de fusion (MI 5,16 190°C) égal à 1,75 et une densité de 0,956. La productivité de cette polymérisation correspondait à 67000 g de polymère par g de titane du système catalytique.

**Revendications**

1. Procédé pour la préparation d'une nouvelle composante de métal de transition sur support polymère, utilisable comme élément constitutif d'un système catalytique de polymérisation d'oléfines, dans lequel on dépose un composé organométallique de magnésium sur un support polymère poreux à l'état divisé par imprégnation dudit support à l'aide d'une solution du composé de magnésium, dans un solvant inerte ne dissolvant pas le support, puis évaporation dudit solvant et l'on traite le support chargé du composé de magnésium au moyen d'une phase liquide renfermant au moins un composé d'un métal de transition choisi parmi Ti, V, Zr et Cr, lesdites opérations étant effectuées à des températures inférieures au point de ramollissement du support polymère, caractérisé en ce que l'on soumet le support chargé du composé de magnésium, avant ou après son traitement par le composé de métal de transition, à une chloration effectuée, en l'absence de solvant et à une température inférieure à la température de ramollissement du support polymère, au moyen d'un agent de chloration gazeux ou liquide utilisé en quantité au moins égale à la quantité stoechiométrique pour une chloration complète des composés organométalliques présents au sein du support.

2. Procédé selon la revendication 1, caractérisé en ce que l'imprégnation du support polymère par la solution du composé de magnésium est réalisée en une ou plusieurs étapes en utilisant dans chaque étape un volume de solution de composé de magnésium tel que le produit résultant de la mise en contact dudit support polymère avec ledit volume de solution conserve la forme d'une masse solide à l'état divisé et en effectuant une évaporation du solvant inerte à l'issue de chacune des étapes d'imprégnation.

3. Procédé selon la revendication 1 ou 2, caractérisé en ce que le support polymère poreux à l'état divisé est une poudre d'un polymère thermoplastique et en particulier une poudre d'une polyoléfine, notamment polyéthylène haute densité, polyéthylène basse densité radicalaire, polypropylène et copolymères d'éthylène et d'une ou plusieurs alpha-oléfines en $C_3$ à $C_{12}$.

4. Procédé selon la revendication 3, caractérisé en ce que la poudre de support polymère a une granulométrie correspondant à un diamètre moyen de particules allant de 1 à 5000 microns et de préférence de 40 à 2500 microns.

5. Procédé selon la revendication 3 ou 4, caractérisé en ce que la porosité de la poudre de support polymère correspond à un volume poreux allant de 0,005 à 3 $cm^3/g$, plus particulièrement de 0,01 à 1,5 $cm^3/g$ et de préférence de 0,02 à 0,8 $cm^3/g$.

6. Procédé selon l'une des revendications 1 à 5, caractérisé en ce que, préalablement à l'opération de dépôt du composé de magnésium sur le support polymère à l'état divisé, on soumet ledit support à une opération de dégazage et de séchage par traitement à l'azote et/ou par action du vide.

7. Procédé selon l'une des revendications 1 à 6, caractérisé en ce que, préalablement à l'opération de dépôt du composé de magnésium sur le support polymère à l'état divisé, on traite ledit support par un composé organométallique d'un métal appartenant aux groupes I à III du Tableau Périodique des Eléments autre que le magnésium, ledit composé organométallique étant en particulier un composé organométallique, notamment un composé alcoylé, du lithium, du sodium, du zinc ou de l'aluminium.

8. Procédé selon la revendication 7, caractérisé en ce que ledit composé organométallique est choisi parmi les alcoylaluminium de formule $AlR_xCl_{(3-x)}$, dans laquelle R représente un radical alcoyle en $C_1$ à $C_{12}$, plus particulièrement en $C_2$ à $C_6$, et x est un nombre tel que $1 \leqslant x \leqslant 3$.

9. Procédé selon la revendication 7, caractérisé en ce que ledit composé organométallique est choisi parmi les composés aluminoxanes de formule

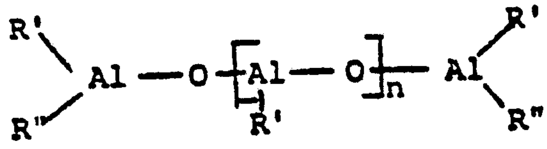

dans laquelle R' désigne un radical alcoyle en $C_1$ à $C_{16}$ et de préférence en $C_1$ à $C_{12}$, les R'' forment ensemble un radical bivalent -O- ou désignent chacun un radical R' et n est un nombre entier prenant les valeurs de 0 à 20 et de préférence de 0 à 12.

10. Procédé selon la revendication 9, caractérisé en ce que le composé aluminoxane est choisi parmi ceux pour lesquels, dans la formule les définissant, R' et R'' désignent chacun un radical alcoyle en $C_1$ à $C_6$ et n est un nombre entier allant de 0 à 8.

11. Procédé selon l'une des revendications 7 à 10, caractérisé en ce que le traitement du support polymère par le composé organométallique est réalisé par mise en contact dudit support avec une phase liquide constituée soit par une solution du composé organométallique dans un solvant inerte ne dissolvant pas ledit

support ou par ledit composé organométallique s'il est liquide, ladite mise en contact étant réalisée, de préférence, en une ou plusieurs étapes en utilisant dans chaque étape un volume de ladite phase liquide tel que le produit résultant de cette mise en contact conserve la forme d'une masse solide à l'état divisé et en effectuant une évaporation du solvant, éventuellement présent, à l'issue de chacune des étapes.

12. Procédé selon l'une des revendications 6 à 11, caractérisé en ce que le traitement du support polymère, préalablement à l'opération de dépôt du composé de magnésium, est réalisé à une température inférieure au point de ramollissement dudit support et notamment entre -40°C et +70°C.

13. Procédé selon l'une des revendications 1 à 12, caractérisé en ce que, préalablement à l'opération de dépôt du composé de magnésium sur le support polymère, on incorpore audit support de 0,01 % à 8 % en poids d'une silice micronisée.

14. Procédé selon l'une des revendications 1 à 13, caractérisé en ce que le composé de magnésium déposé sur le support polymère répond à la formule $Y_aMg_mX_b$, dans laquelle Y désigne un radical alcoyle ou alcoxy en $C_1$ à $C_{12}$, de préférence en $C_1$ à $C_6$, X représente un radical Y ou un atome d'halogène, de préférence un atome de chlore, m est un nombre égal ou supérieur à 1 et a et b sont des nombres égaux ou supérieurs à zéro et tels que $a + b = 2m$.

15. Procédé selon la revendication 14, caractérisé en ce que le composé de magnésium déposé sur le support polymère consiste en un complexe constitué par le produit de réaction du composé de magnésium de formule $Y_aMg_mX_b$ avec un composé aluminoxane suivant la revendication 8 ou 9 ou un composé aluminium alcoyle de formule $Al(R)_3$, R désignant un radical alcoyle en $C_1$ à $C_{12}$ et de préférence en $C_2$ à $C_8$, en quantités telles que le rapport du nombre de moles du composé de magnésium au nombre de moles du composé aluminoxane ou $Al(R)_3$ soit compris entre 0,1 et 100 et de préférence entre 0,2 et 50.

16. Procédé selon l'une des revendications 1 à 15, caractérisé en ce que l'imprégnation du support polymère est réalisée à des températures comprises entre -40°C et +60°C.

17. Procédé selon l'une des revendications 1 à 16, caractérisé en ce que l'évaporation du solvant faisant suite à chaque étape d'imprégnation du support polymère par la solution du composé de magnésium est effectuée par stripage au moyen d'un gaz inerte ou par distillation sous pression réduite, lesdites opérations de stripage ou de distillation étant réalisées à des températures allant de la température ambiante à 70°C.

18. Procédé selon l'une des revendications 1 à 17, caractérisé en ce que la chloration du support polymère imprégné du composé de magnésium est réalisée à des températures entre -30°C et +70°C et de préférence entre 10°C et 60°C.

19. Procédé selon l'une des revendications 1 à 18, caractérisé en ce que l'agent de chloration est choisi parmi HCl anhydre, chlore, $SOCl_2$, $SO_2Cl_2$, $SiCl_4$, $COCl_2$, NOCl, chlorures d'acide de formule $R_1COCl$, chlorure d'hydrocarbyle de formule $R_1Cl$ et chlorosilanes de formule $(R_2)_tSiCl_{(4-t)}$, avec dans ces formules $R_2$ représentant un atome d'hydrogène ou un radical $R_1$, t étant un nombre prenant les valeurs 1, 2 ou 3 et $R_1$ désignant un radical alcoyle en $C_1$ à $C_6$ ou un radical aryle, aralkyle ou alkaryle en $C_6$ à $C_{12}$, l'agent de chloration préféré étant HCl anhydre.

20. Procédé selon l'une des revendications 1 à 19, caractérisé en ce que la quantité d'agent de chloration utilisée est telle que le rapport du nombre d'atomes de chlore fourni par l'agent de chloration au nombre d'atomes de magnésium déposé sur le support est compris entre 2 et 100.

21. Procédé selon l'une des revendications 1 à 20, caractérisé en ce que le traitement du produit chloré par le composé de métal de transition est réalisé par mise en contact dudit produit chloré avec une solution ou une suspension du composé de métal de transition dans un milieu liquide inerte ne dissolvant pas le polymère support, notamment dans un hydrocarbure aliphatique ou cycloaliphatique.

22. Procédé selon la revendition 21, caractérisé en ce que la mise en contact du produit chloré avec la solution ou suspension du composé de métal de transition est effectuée en ajoutant ladite solution ou suspension au produit chloré en une ou plusieurs fois de telle sorte que la masse réactionnelle reste sous la forme d'une masse solide à l'état divisé durant toute la durée du traitement et en éliminant le liquide inerte après chaque addition par balayage au moyen d'un gaz inerte ou par distillation sous pression réduite.

23. Procédé selon l'une des revendications 1 à 20, caractérisé en ce que le composé de métal de transition est un liquide et que ledit composé est déposé sur le support chloré par entraînement à l'état de vapeurs.

24. Procédé selon l'une des revendications 1 à 23, caractérisé en ce que le traitement du produit chloré par le composé de métal de transition est réalisé à des températures comprises entre -30°C et +70°C et de préférence entre 10°C et 60°C.

25. Procédé selon l'une des revendications 1 à 24, caractérisé en ce que le composé de métal de transition est choisi parmi $TiCl_4$, $TiCl_3$, $VCl_4$, $VOCl_3$, $C_rCl_3$, $C_rO_3$, acétylacétonate de vanadium, acétylacétonate de chrome et les composés de formule $Ti(OR)_pCl_{(4-p)}$ et $Zr(OR)_p\, Cl_{(4-p)}$, dans lesquelles R désigne un radical alcoyle en $C_1$ à $C_{12}$ et de préférence en $C_2$ à $C_8$ et p est un nombre entier allant de 1 à 4.

26. Procédé selon l'une des revendications 1 à 25, caractérisé en ce qu'un donneur d'électrons, consistant en une base de Lewis, est associé à la composante de métal de transition soit à l'issue de la préparation de cette dernière ou encore en un point quelconque de son processus d'obtention.

27. Procédé selon la revendication 26, caractérisé en ce que la quantité de donneur d'électrons utilisée est telle que le rapport du nombre d'atomes de magnésium de la composante de métal de transition au nombre de molécules de donneur d'électrons soit compris entre 0,5 et 200 et de préférence entre 1 et 100.

28. Procédé selon l'une des revendications 1 à 27, caractérisé en ce que les quantités de composé de magnésium, de composé de métal de transition et de support polymère, utilisées pour la préparation de la

composante de métal de transition, sont telles que ladite composante renferme, en poids, de 0,01 % à 10 % et de préférence de 0,2 % à 5 % de magnésium et présente un rapport du nombre d'atomes de magnésium au nombre d'atomes de métal de transition allant de 0,5 à 100 et de préférence de 2 à 50.

29. Système catalytique de polymérisation des olèfines résultant de l'association d'une composante de métal de transition à un cocatalyseur choisi parmi les composés organométalliques des métaux des groupes I à III du Tableau Périodique des Eléments, et éventuellement à un donneur d'électrons, caractérisé en ce que l'on utilise une composante de métal de transition obtenue suivant l'une des revendications 1 à 28.

30. Système catalytique selon la revendication 29, caractérisé en ce que la composante de métal de transition et le cocatalyseur sont associés dans des proportions telles que le rapport du nombre d'atomes de métal des groupes I à III du Tableau Périodique des Eléments issus du cocatalyseur au nombre d'atomes de métal de transition contenus dans ladite composante se situe entre 0,5 et 1000 et de préférence entre 1 et 400.

31. Système catalytique selon la revendication 29 ou 30, caractérisé en ce que le cocatalyseur est choisi parmi l'isoprénylaluminium, les composés organomagnésium de formule $Y_aMg_mX_b$ définis à la revendication 13 et les composés organo-aluminium de formule $Al(R''')_qM_rH_s$ dans laquelle M représente Cl ou OR''', R''' désignant un radical alcoyle en $C_1$ à $C_{12}$, de préférence en $C_2$ à $C_8$, et q, r et s sont des nombres tels que $1 \leqslant q \leqslant 3$, $0 \leqslant r \leqslant 2$ et $0 \leqslant s \leqslant 2$ avec $q + r + s = 3$.

32. Système catalytique selon la revendication 31, caractérisé en ce que le cocatalyseur répond à la formule $AlR_xCl_{(3-x)}$, dans laquelle R désigne un radical alcoyle en $C_1$ à $C_{12}$, de préférence en $C_2$ à $C_8$, et x est un nombre tel que $1 \leqslant x \leqslant 3$.

33. Procédé de synthèse d'un polymère ou copolymère oléfinique par mise en contact d'une ou plusieurs oléfines avec un système catalytique résultant de l'association d'une composante de métal de transition avec un cocatalyseur, et éventuellement un donneur d'électrons, caractérisé en ce que le système catalytique utilisé est celui selon l'une des revendications 29 à 32.

34. Procédé selon la revendication 33, caractérisé en ce que la polymérisation est effectuée en suspension dans un milieu liquide inerte ou dans l'une au moins des oléfines à polymériser maintenue à l'état liquide ou hypercritique.

35. Procédé selon la revendication 33, caractérisé en ce que la polymérisation est effectuée en phase gazeuse.

36. Procédé selon la revendication 33 ou 34, caractérisé en ce que l'oléfine ou les oléfines utilisées sont choisies parmi les mono-oléfines en $C_2$ à $C_{12}$, et notamment parmi l'éthylène, le propène, le butène-1 et l'hexène-1.

37. Procédé selon la revendication 35, caractérisé en ce que l'on polymérise un mélange d'éthylène et d'une ou plusieurs alpha-oléfines en $C_3$ à $C_{12}$, notamment propène, butène-1, hexène-1, méthyl-4 pentène-1 et octène-1, ledit mélange renfermant, lorsqu'il est au contact du système catalytique, une proportion molaire d'alpha-oléfines en $C_3$ à $C_{12}$ comprise entre 0,1 et 90 % et de préférence entre 1 et 60 %.

**Patentansprüche**

1. Verfahren zur Herstellung einer neuen Übergangsmetallkomponente auf polymerem Träger, verwendbar als Grundbestandteil eines katalytischen Systems zur Polymerisation von Olefinen, bei dem man eine organometallische Magnesiumverbindung auf einen polymeren porösen Träger in zerkleinertem Zustand aufbringt durch Imprägnierung dieses Trägers mit Hilfe einer Lösung der Magnesiumverbindung, in einem inerten Lösungsmittel, das den Träger nicht löst, anschließend dieses Lösungsmittel verdampft und den mit dieser Magnesiumverbindung beladenen Träger mit einer flüssigen Phase behandelt, die wenigstens eine Verbindung eines Übergangsmetalls ausgewählt aus Ti, V, Zr und Cr enthält, wobei diese Arbeitsschritte bei Temperaturen unterhalb des Erweichungspunkts des polymeren Trägers ausgeführt werden, dadurch gekennzeichnet, daß man den mit der Magnesiumverbindung beladenen Träger vor oder nach seiner Behandlung mit der Übergangsmetallverbindung einer Chlorierung unterwirft, die in Abwesenheit eines Lösungsmittels und bei einer Temperatur unterhalb der Erweichungstemperatur des polymeren Trägers durchgeführt wird, mit Hilfe eines gasförmigen oder flüssigen Chlorierungsagens, das in einer Menge von wenigstens gleich der für eine vollständige Chlorierung der in der Lösung anwesenden Organometall-Verbindungen stöchiometrischen Menge eingesetzt wird.

2. Verfahren nach Anspruch 1, dadurch gekennzeichnet, daß die Imprägnierung des polymeren Trägers mit der Lösung der Magnesium-Verbindung in einem oder mehreren Schritten durchgeführt wird unter Verwendung eines solchen Volumens an Lösung der Magnesium-Verbindung in jedem Schritt, das das erhaltene Produkt des in Kontakt bringens dieses polymeren Trägers mit dem Lösungsvolumen die Form einer festen Masse in zerkleinertem Zustand bewahrt und unter Durchführung einer Verdampfung des inerten Lösungsmittels am Ende eines jeden Imprägnierungsschritts.

3. Verfahren nach Anspruch 1 oder 2, dadurch gekennzeichnet, daß der poröse polymere Träger in zerkleinertem Zustand ein Pulver eines thermoplastischen Polymers ist, insbesondere ein Pulver eines Polyolefins, insbesondere eines Polyethylens hoher Dichte, eines radikalischen Polyethylens geringer Dichte, eines Polypropylens und Copolymeren von Ethylen und ein oder mehreren alpha-Olefinen mit $C_3$ bis $C_{12}$.

4. Verfahren nach Anspruch 3, dadurch gekennzeichnet, daß das Pulver des polymeren Trägers eine

Korngröße hat entsprechend einem mittleren Partikeldurchmesser von 1 bis 5 000 Mikron und vorzugsweise von 40 bis 2 500 Mikron.

5. Verfahren nach Anspruch 3 oder 4, dadurch gekennzeichnet, daß die Porosität des Pulvers des polymeren Trägers einem Porenvolumen von 0,005 bis 3 $cm^3/g$ entspricht, insbesondere von 0,01 bis 1,5 $cm^3/g$ und vorzugsweise von 0,02 bis 0,8 $cm^3/g$.

6. Verfahren nach einem der Ansprüche 1 bis 5, dadurch gekennzeichnet, daß man vor dem Schritt des Aufbringens der Magnesiumverbindung auf den polymeren Träger in zerkleinertem Zustand diesen Träger einem Entgasungs- und einem Trocknungsschritt unterzieht durch Behandlung mit Stickstoff und/oder durch Vakuumeinwirkung.

7. Verfahren nach einem der Ansprüche 1 bis 6, dadurch gekennzeichnet, daß man vor dem Schritt des Aufbringens der Magnesiumverbindung auf den polymeren Träger in.zerkleinertem Zustand diesen Träger mit einer organometallischen Verbindung eines Metalls behandelt, das zu den Gruppen I bis III des Periodensystems der Elemente gehört außer Magnesium, wobei diese Organometallverbindung insbesondere eine solche des Lithiums, Natriums, Zinks oder des Aluminiums ist, insbesondere eine Alkoylverbindung eines dieser Metalle.

8. Verfahren nach Anspruch 7, dadurch gekennzeichnet, daß die organometallische Verbindung ausgewählt wird aus Alkoylaluminium der Formel $AlR_xCl_{(3-x)}$, in der R einen Alkoylrest mit $C_1$ bis $C_{12}$, insbesondere mit $C_2$ bis $C_8$, darstellt und x eine solche Zahl ist, daß gilt $1 \leqslant x \leqslant 3$.

9. Verfahren nach Anspruch 7, dadurch gekennzeichnet, daß diese organometallische Verbindung ausgewählt wird aus den Aluminoxanverbindungen der Formel

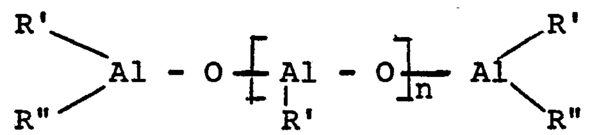

in der R' einen Alkoylrest mit $C_1$ bis $C_{16}$ darstellt, vorzugsweise mit $C_1$ bis $C_{12}$, in der die Reste R" gemeinsam einen bivalenten Rest -O- bilden oder jeweils einen Rest R' darstellen und n eine ganze Zahl ist, die die Werte von 0 bis 20 und vorzugsweise von 0 bis 12 annehmen kann.

10. Verfahren nach Anspruch 9, dadurch gekennzeichnet, daß die Aluminoxanverbindung ausgewählt wird aus denjenigen, bei denen in der diese definierenden Formel R' und R" jeweils einen Alkoylrest mit $C_1$ bis $C_6$ darstellen und n eine ganze Zahl von 0 bis 8 ist.

11. Verfahren nach einem der Ansprüche 7 bis 10, dadurch gekennzeichnet, daß die Behandlung des polymeren Trägers mit der Organometallverbindung durchgeführt wird, in dem man diesen Träger mit einer flüssigen Phase in Kontakt bringt, die entweder aus einer Lösung der organometallischen Verbindung in einem inerten Lösungsmittel besteht, das diesen Träger nicht löst oder aus dieser organometallischen Verbindung selbst, wenn sie flüssig ist, wobei dieses in Kontakt bringen vorzugsweise in ein oder mehreren Schritten unter Verwendung eines solchen Volumens der flüssigen Phase durchgeführt wird, daß das erhaltene Produkt dieses in Kontakt bringens die Form einer festen Masse in zerkleinertem Zustand bewahrt und unter Durchführung eines Verdampfungsschritts des Lösungsmittels, das gegebenenfalls anwesend ist, am Ende eines jeden der Schritte.

12. Verfahren nach einem der Ansprüche 6 bis 11, dadurch gekennzeichnet, daß die Behandlung des polymeren Trägers vor dem Schritt der Aufbringung der Magnesiumverbindung bei einer Temperatur unterhalb des Erweichungspunkts dieses Trägers und insbesondere zwischen -40° C und +70° C durchgeführt wird.

13. Verfahren nach einem der Ansprüche 1 bis 12, dadurch gekennzeichnet, daß vor dem Schritt des Aufbringens der Magnesiumverbindung auf den polymeren Träger man in diesen Träger von 0,01 % bis 8 Gew.-% eines mikronisierten Siliciumdioxids einarbeitet.

14. Verfahren nach einem der Ansprüche 1 bis 13, dadurch gekennzeichnet, daß die auf den polymeren Träger aufgebrachte Magnesiumverbindung der Formel $Y_aMg_mX_b$ entspricht, in der Y einen Alkoylrest oder einen Alkoxyrest mit $C_1$ bis $C_{12}$, vorzugsweise mit $C_1$ bis $C_8$ darstellt, in der X einen Rest Y oder ein Halogenatom darstellt, vorzugsweise ein Chloratom, in der m eine Zahl größer oder gleich 1 ist und a und b Zahlen gleich oder größer als Null sind, so daß gilt $a + b = 2m$.

15. Verfahren nach Anspruch 14, dadurch gekennzeichnet, daß die auf den polymeren Träger aufgebrachte Magnesiumverbindung ein Komplex ist bestehend aus dem Reaktionsprodukt der Magnesiumverbindung der Formel $Y_aMg_mX_b$ mit einer Aluminoxanverbindung gemäß Anspruch 8 oder 9 oder einer Aluminiumalkoylverbindung der Formel $Al(R)_3$, wobei R einen Alkoylrest mit $C_1$ bis $C_{12}$, vorzugsweise $C_2$ bis $C_8$ darstellt, in solchen Mengen, daß das Verhältnis der Anzahl der Mole der Magnesiumverbindung zur Anzahl der Mole der Aluminoxanverbindung oder der Verbindung $Al(R)_3$ zwischen 0,1 und 100 und vorzugsweise zwischen 0,2 und 50 liegt.

16. Verfahren nach einem der Ansprüche 1 bis 15, dadurch gekennzeichnet, daß die Imprägnierung des polymeren Trägers bei Temperaturen zwischen -40° C und +60° C durchgeführt wird.

17. Verfahren nach einem der Ansprüche 1 bis 16, dadurch gekennzeichnet, daß die Verdampfung des Lösungsmittels auf den Imprägnierungsschritt des polymeren Trägers mit der Lösung der Magnesiumverbindung folgt und durchgeführt wird durch Strippen mittels eines inerten Gases oder durch Destillation unter reduziertem Druck, wobei dieser Schritt des Strippens oder der Destillation bei

Temperaturen zwischen Raumtemperatur und 70° C durchgeführt werden.

18. Verfahren nach einem der Ansprüche 1 bis 17, dadurch gekennzeichnet, daß die Chlorierung des polymeren Trägers, der mit der Magnesiumverbindung imprägniert ist, bei Temperaturen zwischen - 30° C und +70° C und vorzugsweise zwischen 10° C und 60° C durchgeführt wird.

19. Verfahren nach einem der Ansprüche 1 bis 18, dadurch gekennzeichnet, daß das Chlorierungsagens ausgewählt wird aus wasserfreiem HCl, Chlor, $SOCl_2$, $SO_2Cl_2$, $SiCl_4$, $COCl_2$, NOCl, Säurechloriden der Formel $R_1COCl$, Kohlenwasserstoffchloriden der Formel $R_1Cl$ und Chlorsilanen der Formel $(R_2)_tSiCl_{(4-t)}$, wobei in diesen Formeln $R_2$ ein Wasserstoffatom oder einen Rest $R_1$ darstellt, t eine Zahl mit den Werten 1, 2 oder 3 ist und $R_1$ einen Alkoylrest mit $C_1$ bis $C_6$ oder einen Arylrest, einen Aralkylrest oder Alkarylrest mit $C_6$ bis $C_{12}$ darstellt, wobei das bevorzugte Chlorierungsagens wasserfreie HCl ist.

20. Verfahren nach einem der Ansprüche 1 bis 19, dadurch gekennzeichnet, daß die eingesetzte Menge des Chlorierungsagens so gewählt ist, daß das Verhältnis der Zahl der durch das Chlorierungsagens gelieferten Chloratome zur Zahl der auf den Träger aufgebrachten Magnesiumatome zwischen 2 und 100 beträgt.

21. Verfahren nach einem der Ansprüche 1 bis 20, dadurch gekennzeichnet, daß die Behandlung des chlorierten Produkts mit der Übergangsmetallverbindung durchgeführt wird durch in Kontakt bringen dieses chlorierten Produkts mit einer Lösung oder einer Suspension der Übergangsmetallverbindung in einem inerten flüssigen Milieu, das den polymeren Träger nicht löst, insbesondere in einem aliphatischen oder cycloaliphatischen Kohlenwasserstoff.

22. Verfahren nach Anspruch 21, dadurch gekennzeichnet, daß das in Kontakt bringen des chlorierten Produkts mit der Lösung oder Suspension der Übergangsmetallverbindung durchgeführt wird durch Hinzufügen dieser Lösung oder Suspension zu dem chlorierten Produkt einmal oder mehrfach in der Weise, daß die Reaktionsmasse während der gesamten Dauer der Behandlung in der Form einer festen Masse in zerkleinertem Zustand verbleibt und unter Entfernung der inerten Flüssigkeit nach jeder Zugabe durch Spülen mit Hilfe eines inerten Gases oder durch Destillation unter reduziertem Druck.

23. Verfahren nach einem der Ansprüche 1 bis 20, dadurch gekennzeichnet, daß die Übergangsmetallverbindung eine Flüssigkeit ist und diese Verbindung auf den chlorierten Träger durch Mitschleppen im Dampfzustand aufgebracht wird.

24. Verfahren nach einem der Ansprüche 1 bis 23, dadurch gekennzeichnet, daß die Behandlung des chlorierten Produkts mit der Übergangsmetallverbindung bei Temperaturen zwischen -30° C und +70° C und vorzugsweise zwischen 10° C und 60° C durchgeführt wird.

25. Verfahren nach einem der Ansprüche 1 bis 24, dadurch gekennzeichnet, daß die Übergangsmetallverbindung ausgewählt wird aus $TiCl_4$, $TiCl_3$, $VCl_4$, $VOCl_3$, $CrCl_3$, $CrO_3$ Vanadiumacetylacetonat, Chromacetylacetonat und den Verbindungen der Formel $Ti(OR)_pCl_{(4-p)}$ und $Zr(OR)_pCl_{(4-p)}$, in denen R einen Alkoylrest mit $C_1$ bis $C_{12}$ und vorzugsweise mit $C_2$ bis $C_8$ darstellt und p eine ganze Zahl von 1 bis 4 ist.

26. Verfahren nach einem der Ansprüche 1 bis 25, dadurch gekennzeichnet, daß ein Elektronendonor, bestehend aus einer Lewis-Base, mit der Übergangsmetallkomponente kombiniert wird, und zwar entweder gegen Ende der Herstellung dieser letzteren oder auch an irgendeinem Punkt des Verfahrens zu deren Herstellung.

27. Verfahren nach Anspruch 26, dadurch gekennzeichnet, daß die eingesetzte Menge des Elektronendonors so gewählt ist, daß das Verhältnis der Zahl der Magnesiumatome der Übergangsmetallkomponente zur Zahl der Elektronendonormoleküle zwischen 0,5 und 200 und vorzugsweise 1 bis 100 beträgt.

28. Verfahren nach einem der Ansprüche 1 bis 27, dadurch gekennzeichnet, daß die Mengen der Magnesiumverbindung, der Übergangsmetallverbindung und des polymeren Trägers, die für die Herstellung der Übergangsmetallkomponente verwendet werden, so gewählt sind, daß diese Komponente an Gewicht 0,01 % bis 10 % und vorzugsweise 0,2 % bis 5 % Magnesium enthält und ein Verhältnis der Zahl der Magnesiumatome zur Zahl der Übergangsmetallatome zwischen 0,5 und 100 und vorzugsweise zwischen 2 und 50 aufweist.

29. Katalytisches System für die Polymerisation von Olefinen erhältlich durch Kombination einer Übergangsmetallkomponente mit einem Cokatalysator ausgewählt aus den organometallischen Verbindungen der Metalle der Gruppen I bis III des Periodensystems der Elemente und gegebenenfalls mit einem Elektronendonor, dadurch gekennzeichnet, daß man eine Übergangsmetallkomponente verwendet, die gemäß einem der Ansprüche 1 bis 28 erhältlich ist.

30. Katalytisches System gemäß Anspruch 29, dadurch gekennzeichnet, daß die Übergangsmetallkomponente und der Cokatalysator in solchen Anteilen kombiniert werden, daß das Verhältnis der Zahl der Metallatome der Gruppen I bis III des Periodensystems der Elemente aus dem Cokatalysator zur Zahl der Übergangsmetallatome, die in dieser Komponente enthalten sind, zwischen 0,5 und 1000 und vorzugsweise zwischen 1 und 400 liegt.

31. Katalytisches System gemäß Anspruch 29 oder 30, dadurch gekennzeichnet, daß der Cokatalysator ausgewählt wird aus Isoprenylaluminium, den Organomagnesiumverbindungen der Formel $Y_aMg_mX_b$ gemäß der Definition von Anspruch 13 und den Organoaluminiumverbindungen der Formel $Al(R''')_qM_rH_s$ in der M Cl oder OR''' darstellt, wobei R''' einen Alkoylrest mit $C_1$ bis $C_{12}$ und vorzugsweise mit $C_2$ bis $C_8$ darstellt und q, r und s Zahlen sind, so daß gilt $1 \leqslant q \leqslant 3$, $0 \leqslant r \leqslant 2$ und $0 \leqslant s \leqslant 2$ mit $q + r + s = 3$.

32. Katalytisches System gemäß Anspruch 31, dadurch gekennzeichnet, daß der Cokatalysator der Formel $AlR_xCl_{(3-x)}$ entspricht, in der R einen Alkoylrest mit $C_1$ bis $C_{12}$ und vorzugsweise mit $C_2$ bis $C_8$ darstellt und X

eine Zahl ist, so daß gilt $1 \leqslant x \leqslant 3$.

33. Verfahren zur Herstellung eines olefinischen Polymeren oder Copolymeren durch in Kontakt bringen ein oder mehrerer Olefine mit einem katalytischen System, das sich durch Kombination einer Übergangsmetallkomponente mit einem Cokatalysator ergibt, und eventuell einem Elektronendonor, dadurch gekennzeichnet, daß das verwendete katalytische System ein solches gemäß einem der Ansprüche 29 bis 32 ist.

34. Verfahren nach Anspruch 33, dadurch gekennzeichnet, daß die Polymerisation in Suspension in einem inerten flüssigen Milieu oder in wenigstens einem der zu polymerisierenden Olefine durchgeführt wird, das in flüssigem oder hyperkritischen Zustand gehalten wird.

35. Verfahren nach Anspruch 33, dadurch gekennzeichnet, daß die Polymerisation in der Gasphase durchgeführt wird.

36. Verfahren nach Anspruch 33 oder 34, dadurch gekennzeichnet, daß das eingesetzte Olefin oder die eingesetzten Olefine ausgewählt werden aus Monoolefinen mit $C_2$ bis $C_{12}$ und insbesondere aus Ethylen, Propen, 1-Buten und 1-Hexen.

37. Verfahren nach Anspruch 35, dadurch gekennzeichnet, daß man ein Gemisch aus Ethylen und ein oder mehreren alpha-Olefinen mit $C_3$ bis $C_{12}$, insbesondere Propen, 1-Buten, 1-Hexen, 4-Methyl-1-penten und 1-Octen polymerisiert, wobei dieses Gemisch, wenn es mit dem katalytischen Systems in Kontakt steht, einen molaren Anteil an alpha-Olefinen mit $C_3$ bis $C_{12}$ von zwischen 0,1 und 90 % und vorzugsweise zwischen 1 und 60 % enthält.

**Claims**

1. A process for preparing a new transition metal composition on a polymer carrier, which can be used as a constituent of a catalytic system for polymerization of olefins, in which method an organometallic magnesium compound is deposited on a particulate porous polymer carrier by impregnation of the said carrier with a solution of the magnesium compound in an inert solvent which does not dissolve the carrier, followed by evaporation of the solvent, and the carrier loaded with the magnesium compound is treated with a liquid phase containing at least one transition metal compound selected from Ti, V, Zr and Cr, these steps being performed at temperatures below the softening temperature of the polymer carrier, characterized in that the carrier loaded with the magnesium compound is subjected, before or after its treatment with the transition metal compound, to a chlorination treatment which is performed in the absence of solvent and at a temperature below the softening temperature of the polymer carrier, by means of a gaseous or liquid chlorination agent, the chlorination agent being used in an amount which is at least equal to the stoichiometric amount needed for complete chlorination of the organometallic compounds present in the polymer carrier.

2. A process according to Claim 1, characterized in that the impregnation of the polymer carrier with the solution of magnesium compound is performed in one or more stages, the volume of magnesium compound solution which is used in each stage being such that the product resulting from contacting the polymer carrier with the said volume of solution remains in the form of a particulate solid, the inert solvent being evaporated at the end of each impregnation stage.

3. A process according to Claim 1 or 2, characterized in that the particulate porous polymer carrier is a thermoplastic polymer powder, and in particular a powder of a polyolefin, especially high density polyethylene, branched low density polyethylene, polypropylene, or a copolymer of ethylene with one or a plurality of $C_3$ to $C_{12}$ alpha-olefins.

4. A process according to Claim 3, characterized in that the particulate polymer carrier has a particle size distribution corresponding to a mean particle diameter ranging from 1 to 5 000 microns, and preferably from 40 to 2 500 microns.

5. A process according to Claim 3 or 4, characterized in that the porosity of the particulate polymer carrier corresponds to a total pore volume ranging from 0.005 to 3 $cm^3/g$, more particularly from 0.01 to 1.5 $cm^3/g$, and preferably from 0.02 to 0.8 $cm^3/g$.

6. A process according to any of Claims 1 to 5, characterized in that, before the deposition of the magnesium compound on the particulate polymer carrier, the carrier is subjected to a degassing and drying operation by treatment with nitrogen and/or by the action of a vacuum.

7. A process according to any of Claims 1 to 6, characterized in that, before the deposition of the magnesium compound on the particulate polymer carrier, the carrier is treated with an organometallic compound of a metal belonging to Groups I to III of the Periodic Table of Elements other than magnesium, the said organometallic compound being in particular an organometallic compound, especially an alkyl compound, of lithium, sodium, zinc or aluminium.

8. A process according to Claim 7, characterized in that the said organometallic compound is an alkylaluminium of formula $AlR_xCl_{(3-x)}$, in which R represents a $C_1$ to $C_{12}$ alkyl radical, more particularly a $C_2$ to $C_8$ alkyl radical, and x is a number such that $1 \leqslant x \leqslant 3$.

9. A process according to Claim 7, characterized in that the said organometallic compound is an aluminiumoxane of formula

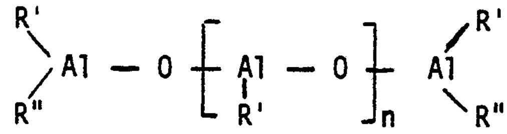

in which R′ represents a $C_1$ to $C_{16}$, preferably a $C_1$ to $C_{12}$, alkyl radical, the R″ radicals together form a bivalent radical -O- or each R″ represents a radical R′, and n is a whole number having a value of 0 to 20, preferably of 0 to 12.

10. A process according to Claim 9, characterized in that the aluminiumoxane compound is one in which each of the R′ and R″ radicals represents a $C_1$ to $C_6$ alkyl radical and n is a whole number ranging from 0 to 8.

11. A process according to any of Claims 7 to 10, characterized in that the treatment of the polymer carrier with the organometallic compound is performed by contacting the said carrier with a liquid phase, which is either a solution of the organometallic compound in an inert solvent which does not dissolve the carrier, or the said organometallic compound if it is a liquid, the contacting preferably being performed in one or more stages, the volume of the liquid phase which is used in each stage being such that the resulting product remains in the form of a particulate solid, any solvent being evaporated at the end of each stage.

12. A process according to any of Claims 6 to 11, characterized in that the treatment of the polymer carrier prior to the deposition of the magnesium compound is performed at a temperature below the softening point of the carrier, preferably at between -40° C and +70° C.

13. A process according to any of Claims 1 to 12, characterized in that prior to the deposition of the magnesium compound on the polymer carrier, from 0.01 % to 8 % by weight of a micronized silica is added to the carrier.

14. A process according to any of Claims 1 to 13, characterized in that the magnesium compound deposited on the polymer carrier is a compound of the formula $Y_aMg_mX_b$ in which Y represents a $C_1$ to $C_{12}$, preferably $C_1$ to $C_8$, alkyl or alkoxy radical, X represents a radical Y or a halogen atom, preferably a chlorine atom, m is a number equal to or greater than 1, and a and b are numbers equal to or greater than zero such that $a + b = 2m$.

15. A process according to Claim 14, characterized in that the magnesium compound deposited on the polymer carrier consists of a complex resulting from the reaction of a magnesium compound of formula $Y_aMg_mX_b$ with an aluminiumoxane compound according to Claim 8 or 9 or an aluminium alkyl compound of formula $Al(R)_3$, wherein R designates a $C_1$ to $C_{12}$, preferably $C_2$ to $C_8$, alkyl radical, in quantities such that the ratio of the number of moles of the magnesium compound to the number of moles of the aluminiumoxane compound or Al(R)3 is between 0.1 and 100, and preferably between 0.2 and 50.

16. A process according to any of Claims 1 to 15, characterized in that the impregnation of the polymer carrier is performed at temperatures between -40° C and +60° C.

17. A process according to any of Claims 1 to 16, characterized in that the evaporation of the solvent following each stage of impregnation of the polymer carrier by the solution of the magnesium compound is performed by stripping by means of an inert gas or by distillation under reduced pressure, the said operations of stripping or distillation being performed at temperatures ranging from ambient temperature to 70° C.

18. A process according to any of Claims 1 to 17, characterized in that the chlorination of the polymer carrier impregnated with the magnesium compound is performed at temperatures between -30° C and +70° C, and preferably between 10° C and 60° C.

19. A process according to any of Claims 1 to 18, characterized in that the chlorinating agent is selected from anhydrous HCl, chlorine, $SOCl_2$, $SO_2Cl_2$, $SiCl_4$, $COCl_2$, NOCl, acid chlorides of formula $R_1COCl$, hydrocarbyl chlorides of formula $R_1Cl$ and chlorosilanes of formula $(R_2)_tSiCl_{(4-t)}$, in which formulae $R_2$ represents a hydrogen atom or a radical $R_1$, t being a number having the value 1, 2 or 3, and $R_1$ represents a $C_1$ to $C_6$ alkyl radical, or a $C_6$ to $C_{12}$ aryl, aralkyl or alkaryl radical, the preferred chlorinating agent being anhydrous HCl.

20. A process according to any of Claims 1 to 19, characterized in that the amount of chlorinating agent which is used is such that the ratio of the number of chlorine atoms supplied by the chlorinating agent to the number of atoms of magnesium deposited on the carrier is between 2 and 100.

21. A process according to any of Claims 1 to 20, characterized in that the treatment of the chlorinated product with the transition metal compound is performed by contacting the said chlorinated product with a solution or suspension of the transition metal compound in an inert liquid medium which does not dissolve the polymer carrier, especially in an aliphatic or cycloaliphatic hydrocarbon.

22. A process according to Claim 21, characterized in that the contacting of the chlorinated product with the solution or suspension of the transition metal compound is performed by adding the said solution or suspension to the chlorinated product one or several times in such a way that the reaction mass remains in the form of a particulate solid throughout the treatment, and the inert liquid is removed after each addition by flushing out using an inert gas or by distillation under reduced pressure.

23. A process according to any of Claims 1 to 20, characterized in that the transition metal compound is a liquid and in that the said compound is deposited on the chlorinated carrier by entrainment in the vapour state.

24. A process according to any of Claims 1 to 23, characterized in that the treatment of the chlorinated product by the transition metal compound is performed at temperatures between -30°C and +70°C, and preferably between 10°C and 60°C.

25. A process according to any of Claims 1 to 24, characterized in that the transition metal compound is selected from $TiCl_4$, $TiCl_3$, $VCl_4$, $VOCl_3$, $CrCl_3$, $CrO_3$, vanadium acetylacetonate, chromium acetylacetonate, and compounds of formula $Ti(OR)_pCl_{(4-p)}$ and $Zr(OR)_pCl_{(4-p)}$ where R represents a $C_1$ to $C_{12}$, preferably $C_2$ to $C_8$, alkyl radical, and p is a whole number ranging from 1 to 4.

26. A process according to any of Claims 1 to 25, characterized in that an electron donor, consisting of a Lewis base, is associated with the transition metal composition, either at the end of the preparation of the latter or at any stage in its preparation.

27. A process according to Claim 26, characterized in that the quantity of electron donor employed is such that the ratio of the number of atoms of magnesium in the transition metal composition to the number of molecules of electron donor is between 0.5 and 200, and preferably between 1 and 100.

28. A process according to any of Claims 1 to 27, characterized in that the quantities of the magnesium compound, the transition metal compound, and the polymer carrier used to produce the transition metal composition are such that the said composition contains from 0.01 % to 10 %, and preferably 0.2 % to 5 %, by weight of magnesium and has a ratio of number of atoms of magnesium to the number of atoms of transition metal ranging from 0.5 to 100, and preferably from 2 to 50.

29. A catalytic system for polymerization of olefins resulting from the association of a transition metal composition with a co-catalyst selected from metals of Groups I to III of the Periodic Table of Elements, and optionally an electron donor, characterized in that the transition metal composition is a transition metal composition prepared according to any of Claims 1 to 28.

30. A catalytic system according to Claim 29, characterized in that the transition metal composition and the co-catalyst are associated in proportions such that the number of atoms of metal of Groups I to III of the Periodic Table of Elements derived from the co-catalyst to the number of atoms of transition metal contained in the said composition is between 0.5 and 1000, and preferably between 1 and 400.

31. A catalytic system according to Claim 29 or 30, characterized in that the co-catalyst is selected from isoprenylaluminium, organomagnesium compounds of formula $Y_aMg_mX_b$ as defined in Claim 13, and organoaluminium compounds of formula $Al(R''')_qM_rH_s$ where M represents Cl or OR''', R''' representing a $C_1$ to $C_{12}$, preferably $C_2$ to $C_8$, alkyl radical, and q, r and s are numbers such that $1 \leqslant q \leqslant 3$, $0 \leqslant r \leqslant 2$ and $0 \leqslant s \leqslant 2$, where $q + r + s = 3$.

32. A catalytic system according to Claim 31, characterized in that the co-catalyst is of the formula $AlR_xCl_{(3-x)}$ where R represents a $C_1$ to $C_{12}$, preferably $C_2$ to $C_8$, alkyl radical, and x is a number such that $1 \leqslant x \leqslant 3$.

33. A process for preparing an olefinic polymer or copolymer by contacting one or more olefins with a catalytic system resulting from the association of a transition metal composition and a co-catalyst, and optionally an electron donor, characterized in that the catalytic system used is a catalyst system according to any of Claims 29 to 32.

34. A process according to Claim 33, characterized in that the polymerization is performed in suspension in an inert liquid medium or in at least one of the olefins to be polymerized which olefin is maintained in the liquid or supercritical state.

35. A process according to Claim 33, characterized in that the polymerization is performed in the gaseous phase.

36. A process according to Claim 33 or 34, characterized in that the olefin or olefins used are selected from $C_2$ to $C_{12}$ mono-olefins, and especially from ethylene, propylene, 1-butene, and 1-hexene.

37. A process according to Claim 35, characterized in that a mixture of ethylene and one or more $C_3$ to $C_{12}$ alpha-olefins, especially propylene, 1-butene, 1-hexene, 4-methyl-1-pentene and 1-octene, is polymerized, the said mixture containing, when it is in contact with the catalytic system, a molar proportion of $C_3$ to $C_{12}$ alpha-olefins which is between 0.1 and 90 %, preferably between 1 and 60 %.